# FASCICULE DE BREVET EUROPEEN

(11) **EP 4 295 191 B1**
(45) Date de publication et mention de la délivrance du brevet: **11.12.2024**
(21) Numéro de dépôt: 22701993.2
(22) Date de dépôt: 27.01.2022
(51) Int. Cl.: G02B 27/00, G02B 30/29, H04N 13/305, H04N 13/366, H04N 13/317, H04N 13/324

(54) **ÉCRAN D'AFFICHAGE AUTOSTÉRÉOSCOPIQUE À P POINTS-DE-VUE DESTINÉ À AFFICHER UNE IMAGE AUTOSTÉRÉOSCOPIQUE À I POINTS-DE-VUE ET DISPOSITIF D'AFFICHAGE COMPRENANT UN TEL ÉCRAN**
AUTOSTEREOSKOPISCHE ANZEIGE MIT P ANSICHTEN ZUR ANZEIGE EINES AUTOSTEREOSKOPISCHEN BILDES MIT I ANSICHTEN UND ANZEIGEVORRICHTUNG MIT SOLCH EINEM BILDSCHIRM
AUTOSTEREOSCOPIC DISPLAY SCREEN HAVING P VIEWPOINTS FOR DISPLAYING AN AUTOSTEREOSCOPIC IMAGE HAVING I VIEWPOINTS AND DISPLAY DEVICE COMPRISING SUCH A SCREEN

(30) Priorité: 22.02.2021 FR 2101710
(43) Date de publication de la demande: 27.12.2023
(73) Titulaire: ALIOSCOPY, 75020 Paris (FR)
(72) Inventeur: ALLIO, Pierre, 93340 Le Raincy (FR); MAINGREAUD, Flavien, 95450 Commeny (FR); MARCELLIER, Gilles, 75010 Paris (FR)
(74) Mandataire: Bringer IP
(86) Numéro de dépôt international: PCT/EP2022/051906
(87) Numéro de publication internationale: WO 2022/175053

(56) Documents cités:
- WO-A1-2008/003373
- WO-A1-2008/011888
- DE-B3- 102004 059 729
- LIU JING ET AL: "Dynamic mapping for multiview autostereoscopic displays", PROCEEDINGS OF SPIE, IEEE, US, vol. 9391, 16 March 2015 (2015-03-16), pages 93911I - 93911I, XP060050724, ISBN: 978-1-62841-730-2, DOI: 10.1117/12.2185676

## Description

### 1. Domaine technique de l'invention

L'invention concerne un écran d'affichage autostéréoscopique d'une image autostéréoscopique et un dispositif d'affichage comprenant un tel écran d' affichage. L'invention concerne aussi un procédé d'affichage d'une image autostéréoscopique sur un tel écran d'affichage.

### 2. Arrière-plan technologique

L'autostéréoscopie est une technique permettant l'affichage d'images en relief sans exiger le port de lunettes spéciales de la part de l'observateur. Cette technique est connue en elle-même, en particulier des documents de brevets WO2006/024764, WO2014/041504, WO2013/140363, WO2014/016768 au nom du demandeur.

DE 10 2004 059729 B3 décrit un procédé de génération d'une image autostéréoscopique à partir de deux images dédiées respectivement à l'oeil droit et l'oeil gauche d'un observateur. 2

WO 2008/011888 A1 décrit un procédé d'affichage autostéréoscopique d'images sur un écran dans lequel des informations d'image de canaux séparés pour un oeil droit et un oeil gauche d'un utilisateur sont affichées dans des segments entrelacés sur l'écran, et dans lequel un réseau de lentilles est disposé pour dévier la lumière émise à partir de l'écran de telle sorte que les informations d'image de chaque canal sont visibles uniquement pour un oeil de utilisateur. 4

WO 2008/003373 A1 décrit un procédé d'affichage d'images autostéréoscopiques mettant en oeuvre des étapes de détermination des barycentres d'intensité des groupes de sous-pixels en fonction de la positionde l'observateur, et de détection de changement de la position de la tête de l'observateur par rapport à l'écran matriciel et de modification de l'affichage en fonction de la détection du changement de position. 1

LIU JING ET AL: "Dynamic mapping for multiview autostereoscopic displays" (PROCEEDINGS OF SPIE, IEEE, US, vol. 9391, 16 mars 2015) décrit un procédé d'affichage d'une image autostéréoscopique.

D'une manière générale, une image autostéréoscopique est constituée d'une pluralité d'images élémentaires imbriquées, correspondant chacune à des vues d'un même objet ou d'une même scène selon des points-de-vue différents. Un dispositif sélecteur, typiquement constitué par un réseau de lenticules cylindriques ou une barrière de parallaxe, est disposé devant l'écran d'affichage de manière à permettre la projection d'un couple d'images élémentaires correspondant à deux points-de-vue différents de la scène, respectivement vers les deux yeux de l'observateur, ce qui crée une impression de relief dans le cerveau de l'observateur.

Un écran d'affichage d'une image autostéréoscopique à P points-de-vue comprend typiquement une matrice de pixels agencés par lignes et par colonnes, chaque pixel étant composé d'une pluralité de sous-pixels de couleurs différentes. L'écran est en outre surmonté d'un dispositif sélecteur (aussi désigné dans tout le texte par les termes de dispositif optique), tel qu'un réseau de lenticules cylindriques identiques présentant chacune une focale configurée pour pouvoir renvoyer à l'infini les rayons lumineux qui proviennent de l'écran. Le pas du réseau de lenticules cylindriques est précisément calculé de telle sorte que l'observateur voit, à une distance prédéterminée de l'écran (dite distance de teinte plate), les images se succéder à intervalles réguliers, grâce à l'effet loupe du réseau de lenticules.

Cet effet loupe résulte du fait qu'une lentille placée à la bonne distance (sa focale) grossit le sous-pixel qui se trouve dans l'alignement de son centre optique et de la pupille de l'oeil de l'observateur. Si la lentille grossit P fois, le sous-pixel vu à travers la lentille est perçu P fois plus large qu'il n'est en réalité et masque pour l'oeil qui en reçoit la lumière à travers cette lentille les P-1 autres sous-pixels qui ne sont pas dans l'alignement décrit précédemment.

Le réseau de lenticules cylindrique forme donc un dispositif sélecteur de points-de-vue configuré pour permettre la projection d'un couple de points-de-vue différenciés dans l'espace d'observation de l'écran, correspondant à deux points-de-vue différents de la scène, respectivement vers les deux yeux de l'observateur.

Lorsque certains éléments des deux images observées respectivement par l'oeil gauche et l'oeil droit d'un observateur ne présentent aucune disparité (définie comme la différence, mesurée en pixels ou sous-pixels, observable et/ou mesurée entre les images gauche et droite), ces éléments se superposent parfaitement et sont alors perçus sur le plan-même de l'écran. En revanche, lorsqu'il y a une disparité entre les éléments observés, ces derniers jaillissent de l'écran ou au contraire sont perçus en profondeur. Par convention, la profondeur correspond à une disparité positive tandis que le jaillissement correspond à une disparité négative. Le décalage en valeur absolue entre les deux images est le même dans les deux cas mais lorsque la disparité est négative, les éléments jaillissants de l'image gauche sont à droite de ceux de l'image droite et réciproquement. C'est ce décalage qui produit un effet de jaillissement (les deux yeux convergent en avant de l'écran). En revanche, lorsque la disparité est positive, les éléments en profondeur de l'image gauche sont à gauche de ceux de l'image droite et réciproquement (les deux yeux convergent en arrière de l'écran).

Un objet de la taille d'un point est perçu d'autant plus loin du plan de l'écran que le décalage sur le plan horizontal de ce point entre l'image gauche et l'image droite est important.

Les écrans autostéréoscopiques actuels sont confrontés à des limites de profondeur et de jaillissement atteignable sans perte de qualité. Ces écrans permettent d'inscrire le contenu projeté dans un cube de visualisation dont la profondeur avoisine la diagonale de l'écran. Les écrans sont en général utilisés de telle sorte qu'un tiers du cube de visualisation jaillisse de l'écran et que les deux tiers restant soient perçus en profondeur, derrière le plan de l'écran.

Par exemple, sur un écran 24", cela signifie que le cube de visualisation standard peut avoir une amplitude totale de 60 cm environ, avec un jaillissement confortable à 20 cm en avant de l'écran et des arrière-plans à 40 cm derrière l'écran.

Ces limites de profondeur et de jaillissement s'expliquent par des contraintes physiologiques de l'observateur, par des contraintes technologiques et par des contraintes de traitement d'image.

Les contraintes physiologiques résultent du fait que chaque oeil de l'observateur voit une image différente pour pouvoir former un couple stéréoscopique qu'il fusionne en faisant converger son regard là où la disparité semble placer les objets dans l'espace.

La disparité entre les images gauche et droite induit trois modes de convergence différents :
- lorsque l'observateur perçoit un objet en profondeur derrière l'écran, l'oeil gauche regarde plus à gauche et l'oeil droit plus à droite. Ainsi, les deux axes optiques se croisent derrière l'écran, là où se situe l'objet virtuel observé,
- lorsque l'observateur perçoit un objet sur le plan même de l'écran, les deux yeux regardent au même endroit sur l'écran,
- lorsque l'observateur perçoit un objet en jaillissement devant l'écran, l'oeil gauche regarde plus à droite et l'oeil droit plus à gauche. Ainsi, les deux axes optiques se croisent en avant de l'écran, là où se situe l'objet virtuel observé.

Lorsque les objets sont perçus en profondeur ou en jaillissement, le regard converge à des distances différentes de celle du plan de l'écran. Cela entraîne nécessairement une dissociation entre les différentes convergences décrites précédemment et l'accommodation, qui doit correspondre à l'effort de chaque oeil pour voir les images nettes à la distance de l'écran.

Plus un objet est éloigné du plan de l'écran, plus l'effort de dissociation entre le plan de convergence et le plan physique de l'écran où les yeux accommodent est important. Or, les observateurs sont tous inégaux face à la gymnastique oculaire nécessaire pour opérer cette dissociation. Seule l'expérience et l'entraînement permettent sans effort de dissocier vergence et accommodation. Faute d'habitude, les objets peuvent sembler flous, voire dédoublés, lorsque l'on converge loin de la surface de l'écran et que la fusion binoculaire devient difficile. Comme dans le monde physique, les yeux cherchent la netteté à la distance à laquelle ils convergent et où se trouvent les objets virtuels, alors-même que les deux images ne quittent jamais la surface physique de l'écran.

Les contraintes technologiques résultent du fait qu'il est techniquement compliqué d'afficher simultanément plusieurs images sur un écran autostéréoscopique et de les séparer parfaitement pour chaque oeil.

En effet et comme indiqué précédemment, un écran autostéréoscopique est constitué d'un écran et d'un système optique, placé à sa surface. Par effet de loupe, ce système optique permet de subdiviser le champ d'observation de l'écran en zones contigües, chacune spécifiquement réservée à une image différente. Pour voir en relief, il faut à minima que ces images forment un couple stéréoscopique. Il est généralement insuffisant de n'afficher qu'un seul couple à partir de deux images et la majorité des écrans proposés par le demandeur affichent une série de huit images simultanément, stéréoscopiques deux à deux. L'espace formé par les huit zones contigües qu'occupent chacune de ces huit images est désigné par le terme de lobe, que le système optique permet de répéter périodiquement. La succession des points-de-vue se fait toujours dans le même ordre. Cet affichage répétitif permet aux lobes de se répéter sans que le réseau lenticulaire ne se défocalise trop, sur un angle d'approximativement 100°.

Le cloisonnement parfait de l'information affichée dans chaque zone contigüe d'un lobe reste un défi. En effet, la lumière du rétroéclairage de l'écran (plus connue sous la dénomination anglaise de « *backlight* »), traverse de nombreux matériaux avant d'arriver à l'oeil de l'observateur. Une partie de la lumière qui traverse chacune des surfaces de ces différents matériaux est légèrement déviée de sa trajectoire idéale. En outre, pour limiter la diffusion de la lumière émise, les surfaces de l'écran et du réseau lenticulaire doivent être parfaitement polies-glace et ne présenter aucune inhomogénéité interne comme les dépoli dans la matière elle-même, fréquents pour obtenir des surfaces antireflets. Chaque micro-imperfection est susceptible de dévier la lumière et de perturber l'effet de réfraction des microlentilles destiné à séparer les points-de-vue. La forme des pixels et le fait que l'axe optique des lentilles puisse intersecter simultanément des sous-pixels assignés à des points-de-vue différents peut empêcher ce cloisonnement.

Les contraintes de traitement d'image résultent du fait que les options de traitement informatique sont dépendantes d'un certain nombre de paramètres parmi lesquels le nombre de points-de-vue, leur répétition, la largeur des lobes, la distance d'observation, le nombre d'observateurs simultanés. Il arrive que l'électronique de l'écran ou de l'ordinateur applique des modifications peut détectables au contenu des images à afficher, ce qui a pour effet d'en modifier la localisation stricte nécessaire. Par exemple, en modifiant l'intensité d'un pixel entier, on affecte ses trois sous pixels en même temps, soit simultanément trois points-de-vue (dans le cas où on utilise un seul sous-pixel par point-de-vue image).

Le demandeur a déjà proposé un système équipé d'un dispositif de suivi de la tête de l'observateur (plus connu sous la dénomination anglaise de dispositif de « *tracking* ») pour permettre d'afficher en temps réel les points-de-vue à adresser à chaque oeil de l'observateur. La rapidité et la précision du suivi sont d'autant plus critiques que les objets sont éloignés du plan de l'écran. Un infime mouvement de la tête se traduit alors par un important déplacement apparent des objets, en particulier, lorsque les objets sont très en profondeur, ce qui est l'un des objectifs de l'invention.

Les inventeurs ont donc cherché une solution qui permette de surmonter au moins certaines des contraintes susmentionnées.

### 3. Objectifs de l'invention

L'invention vise à fournir un écran d'affichage autostéréoscopique qui permet de dépasser les limites de jaillissement et de profondeur atteignables par les écrans autostéréoscopiques connus.

L'invention vise notamment à fournir un écran au pouvoir séparateur quasi parfait, qui donne à l'observateur la possibilité de percevoir le volume en jaillissement jusqu' à la moitié de la distance de la teinte plate et celui en profondeur jusqu'à plusieurs mètres derrière le plan de l'écran, sans qu'il y ait véritablement de limite, tout en conservant une netteté optimale de l'affichage pour chaque oeil, en dépit de l'importante disparité qu'il est nécessaire d'inscrire dans le contenu pour y parvenir.

L'invention vise en particulier à fournir un écran d'affichage qui permet de démultiplier les performances de relief des écrans connus tout en maintenant, voire en améliorant, la qualité de l'image observée.

L'invention vise en particulier à fournir un écran d'affichage d'une image autostéréoscopique qui présente un pouvoir séparateur plus important que les écrans connus.

L'invention vise aussi à fournir un écran d'affichage qui permet de limiter les interférences entre les points-de-vue visibles par chaque oeil de l'observateur.

L'invention vise aussi à fournir un dispositif d'affichage autostéréoscopique qui comprend un écran d'affichage selon l'invention.

L'invention vise enfin à fournir un procédé d'affichage d'une image autostéréoscopique sur un écran d'affichage autostéréoscopique selon l'invention.

### 4. Exposé de l'invention

Pour ce faire, l'invention selon la revendication 1 concerne un écran d'affichage autostéréoscopique à P points-de-vue, dits points-de-vue écran, P étant un entier supérieur ou égal à 6, destiné à afficher une image autostéréoscopique à I points-de-vue, dits points-de-vue image, I étant un entier supérieur ou égal à 2, inférieur ou égal à P/3, de préférence égal à 2, ledit écran comprenant :
- une matrice de pixels agencés par lignes et par colonnes, chaque pixel étant composé d'une pluralité de sous-pixels de couleurs différentes, destinés à afficher chacun un sous-pixel d'un des points-de-vue image,
- un réseau de lenticules cylindriques ou une barrière de parallaxe, dit réseau optique, configuré pour permettre la projection de couples de points-de-vue de l'écran prédéterminés vers les yeux d'un observateur situé à une distance nominale de l'écran, dite distance de teinte plate.
L'écran selon l'invention est caractérisé en ce que ledit réseau optique est configuré pour que les P points-de-vue de l'écran puissent être perçus successivement dans une direction, dite direction horizontale, par ledit observateur à ladite distance de teinte plate, dans des espaces devant l'écran, dit lobes, couvrant chacun I fois l'écart inter-pupillaire moyen d'un observateur, et pour que les points-de-vue écran de chaque couple de points-de-vue visibles par l'observateur à la distance de teinte plate soient séparés par au moins T points-de-vue écran, dits points-de-vue tampons, T étant supérieur ou égal à 2, de telle sorte qu'il soit possible d'afficher successivement pour chaque lobe, chacun des I points-de-vue image, répété chacun P/I fois, et que chaque point-de-vue visible par l'observateur à la distance de teinte plate puisse être encadré d'au moins 2 points-de-vue tampons affichant chacun ce même point-de-vue image.

Un écran d'affichage selon l'invention présente donc la particularité d'être équipé d'un réseau optique, tel qu'un réseau de lenticules cylindriques (aussi désigné par les termes de composant optique) configuré pour afficher P points-de-vue, par exemple 10 points-de-vue (dans le cas où P est égal à 10).

Lorsque l'invention utilise un seul sous-pixel par point-de-vue par lentille et par ligne horizontale, chaque lentille du réseau lenticulaires couvre sur chaque ligne horizontale P sous-pixels. Lorsque l'invention utilise un seul sous-pixel par point-de-vue par lentille sur L lignes horizontales, chaque lentille du réseau lenticulaires couvre sur chaque ligne horizontale P/L sous-pixels.

Un écran selon l'invention permet d'obtenir un pouvoir séparateur quasi parfait, grâce à la création de zones tampon formées par duplication des points-de-vue image et isolant l'un de l'autre les deux points-de-vue perçus par chacun des deux yeux. Les I points-de-vue image forment 1-1 couples stéréoscopiques successifs deux à deux et ces différents points-de-vue sont séparés les uns des autres par des zones tampons créées par duplication d'un point-de-vue image. En d'autres termes, chacun des I points-de-vue écrans visibles par l'observateur à la distance de teinte plate et affichant chacun un point-de-vue image est encadré d'au moins 2 points-de-vue tampons affichant chacun ce même point-de-vue image.

En outre, chaque lobe couvrant I fois l'écart inter-pupillaire moyen d'un observateur, chacun des I points-de-vue image bénéficie d'un espace correspondant à un écart inter-pupillaire pour y afficher le point-de-vue perçu et ses points-de-vue tampons.

L'invention va ainsi à l'encontre du préjugé de l'homme du métier qui considère généralement que l'amélioration d'un système autostéréoscopique devrait se faire par l'augmentation du nombre de points-de-vue image, pour augmenter la largeur du lobe, la parallaxe et la distance d'observation en avant et en arrière de la distance de teinte plate, de façon à donner au spectateur une plus grande liberté de positionnement. Cela peut se faire au détriment de la résolution perçue si l'on n'augmente pas proportionnellement la résolution de l'écran.

L'invention ne cherche pas à donner au spectateur une plus grande latitude de positionnement mais à libérer le volume qu'il perçoit. Elle tend plutôt pour cela à fixer sa position, de façon à limiter au maximum le nombre de points-de-vue image nécessaires, deux seulement pouvant suffire, de telle sorte à obtenir un pouvoir séparateur quasi parfait et à rendre possible la perception de volumes inhabituellement profonds.

L'invention permet de créer un sous-lobe monoculaire par point de vue image, égal en largeur à l'écart inter pupillaire de référence (6,5 cm environ), et de produire dans ce sous-lobe monoculaire les moyens d'y afficher plusieurs fois la même image, de telle sorte que chaque instance de cette image soit visible sur une largeur égale au sous-lobe monoculaire divisé par le nombre de fois où l'image est dupliquée.

En l'absence de l'invention et lorsque les contenus sont repoussés loin devant ou derrière le plan de l'écran, la disparité est très importante et la problématique des fantômes particulièrement aigüe. L'image vue par chaque oeil est susceptible de conserver une rémanence de l'image destinée à l'autre oeil. Dès lors, l'oeil gauche voit non seulement l'image gauche qui lui est destinée, mais aussi le fantôme de l'image droite et inversement, l'oeil droit voit non seulement l'image droite qui lui est destinée, mais aussi le fantôme de l'image gauche. Or le fantôme de l'image droite vu dans l'image gauche s'apparie stéréoscopiquement avec l'image droite elle-même, tandis que le fantôme de l'image gauche vu dans l'image droite s'apparie stéréoscopiquement avec l'image gauche elle-même, ce qui positionne les fantômes sur le plan même de l'écran, et non aux contours des éléments en profondeur.

Avec l'invention, les points-de-vue voisins de ceux observés par les yeux de l'observateur sont issus de la même image, ce qui rend la diaphonie entre eux imperceptible.

Dans la mesure où les images dédiées aux yeux de l'observateur sont chacune répliquées plusieurs fois (au moins 2 répliques pour former au moins 3 points-de-vue successifs identiques en comptant le point-de-vue observé par l'oeil de l'observateur), chaque sous-pixel grossi par une lentille pour un oeil est encadré de sous-pixels qui appartiennent à la même image. Ainsi encadré de ses pairs, un sous-pixel ne peut plus parasiter celui destiné à l'autre oeil. S'il interfère avec ses voisins immédiats, cela ne se voit pas.

Un écran d'affichage selon l'invention présente donc la particularité de permettre l'affichage de T points-de-vue tampons entre les points-de-vue dédiés respectivement à l'oeil gauche et à l'oeil droit de l'observateur.

Un écran selon l'invention permet non seulement de bénéficier d'un pouvoir séparateur quasi parfait, mais également de présenter les avantages d'un contenu multi points-de-vue traditionnel, à savoir :
- la possibilité de s'éloigner de la distance de teinte plate grâce à la recombinaison des points-de-vue ;
- l'augmentation proportionnelle du lobe et donc de l'espace dans lequel le spectateur peut placer ses yeux ;
- l'effet de parallaxe obtenu lorsque l'on se déplace horizontalement le long de l'écran ;
- la garantie que les éventuels fantômes restants, en cas de très forts contrastes et de disparités extrêmes par exemple, soient perçus à l'orée des objets et non sur le plan de collimation des images. C'est un atout indéniable pour les applications qui requièrent la mise en oeuvre de rendus propices à la perception de fantômes.

De préférence, le réseau optique d'un écran selon l'invention est formé de lentilles cylindriques qui présentent chacune un axe principal qui forme un angle α avec la direction des colonnes.

Diverses inclinaisons du réseau optique (entre le réseau vertical et le réseau à 45°) peuvent être utilisées à condition de définir une grille de répartition des points-de-vue adaptée. Il est par exemple possible d'utiliser un réseau dont les lentilles sont inclinées d'un angle α de 9,46°, de 18,43°, de 26,56°, ou de 33.69°, comme représenté sur les figures discutées ultérieurement.

Selon une variante particulièrement avantageuse de l'invention, I est égal à 2 et ledit réseau optique est configuré pour pouvoir afficher dans chaque lobe, M fois le point-de-vue image dédié à l'oeil gauche de l'observateur et N fois le point-de-vue image dédié à l'oeil droit de l'observateur, M et N étant chacun supérieur ou égal à 3 et leur somme étant égal à P, et en formant T points-de-vue tampons entre le point-de-vue dédié à l'oeil gauche et le point-de-vue dédié à l'oeil droit.

Cette variante avantageuse concerne un écran destiné à afficher une image autostéréoscopique à 2 points-de-vue destinés respectivement à l'oeil droit et l'oeil gauche de l'observateur.

Dans ce cas préférentiel d'affichage d'une image autostéréoscopique à 2 points-de-vue (I=2), l'écran est contrôlé pour n'afficher que deux images différentes destinées respectivement à l'oeil gauche et à l'oeil droit de l'observateur. En d'autres termes, chaque image est répétée plusieurs fois pour chaque oeil, en l'occurrence M fois pour l'oeil gauche et N fois pour l'oeil droit, M et N étant chacun un entier supérieur ou égal à 3 et leur somme étant égal à P.

En outre, les paramètres optiques du composant optique sont choisis pour que les P points-de-vue (M points-de-vue pour l'oeil gauche et N points-de-vue pour l'oeil droit) couvrent un lobe qui s'étend sur une distance égale à deux fois l'écart inter-pupillaire moyen d'un observateur, c'est-à-dire en pratique une distance de l'ordre de 13 cm (l'écart inter-pupillaire moyen d'un adulte étant de 6,5 cm).

Ainsi, et dans le cas où P est égal à 10 et I est égal à 2, un changement de point-de-vue écran intervient, à la distance de teinte plate, tous les 1,3 cm.

L'écran d'affichage selon cette variante peut être conçu de telle sorte que le nombre de points-de-vue écran destinés à afficher le point-de-vue image dédié à l'oeil gauche d'un observateur situé à la distance de teinte plate soit égal ou différent au nombre de points-de-vue écran destinés à afficher le point-de-vue image dédié à l'oeil droit de l'observateur. En d'autres termes, l'écran peut être conçu de manière à obtenir un agencement symétrique (M et N sont alors égaux) ou asymétrique (M et N sont alors différents l'un de l'autre) des points-de-vue dédiés à chacun des deux yeux de l'observateur.

De préférence, M et N sont égaux et l'écran permet un affichage symétrique des points-de-vue dédiés respectivement à l'oeil gauche et à l'oeil droit de l'observateur.

Cela étant, il est également possible d'exploiter un agencement asymétrique et d'en minimiser les inconvénients, en tenant compte du sens de déplacement de la tête de l'observateur pour positionner le plus grand nombre de points-de-vue tampons dans la zone du lobe vers laquelle les yeux se dirigent, et en optimisant de manière dynamique l'attribution des points-de-vue de façon prédictive, en opérant des permutations dans des parties du lobe non perçues par les yeux de l'observateur. Cela nécessite l'utilisation d'un dispositif de détection de la position de la tête de l'observateur, comme discuté ultérieurement en lien avec le dispositif selon l'invention.

De préférence et selon cette variante, l'écran est en outre conçu pour que la somme du nombre de points-de-vue à gauche de l'oeil gauche et du nombre de points-de-vue à droite de l'œil droit soit égale au nombre de points-de-vue tampons T séparant ceux perçus par les deux yeux de l'observateur.

Cela permet de disposer d'un même nombre de points-de-vue tampons T successifs de chaque côté des deux yeux.

Selon un mode de réalisation particulier de la variante de l'invention à 2 points-de-vue image (I égal à 2), P est égal à 10 de sorte que l'écran présente 10 points-de-vue écran et ledit réseau optique est configuré pour que les couples visibles par l'observateur à la distance de teinte plate soient les vues 1-6, 2-7, 3-8, 4-9, 5-10 pour des points-de-vue écran numérotés successivement de 1 à 10 de sorte que chaque sous-pixel perçu par chaque oeil de l'observateur puisse être entouré de chaque côté par 2 points-de-vue tampons.

Ainsi et dans le cas où P est égal à 10 et M et N sont chacun égal à 5, les points-de-vue perçus par chaque oeil sont toujours séparés par 4 autres points-de-vue, qui servent de tampon et évitent les interférences.

Ainsi, lorsque l'oeil droit perçoit le point-de-vue n° 3, l'oeil gauche perçoit le point-de-vue n° 8. Ce point-de-vue n° 3 est encadré sur sa gauche par les points-de-vue n° 1 et n° 2 et sur sa droite par les points-de-vue n° 4 et n° 5, tandis que le point-de-vue n° 8 est encadré sur sa gauche par les points-de-vue n° 6 et n° 7 et sur sa droite par les points-de-vue n° 9 et n° 10. Dans ce cas de figure, les 2 points-de-vue perçus par l'observateur sont isolés l'un de l'autre par 4 points-de-vue tampons, ce qui permet d'éviter les interférences. Le pouvoir séparateur est donc optimal pour l'écran selon ce mode de réalisation préférentiel de l'invention.

Selon un mode de réalisation particulier de la variante de l'invention à 2 points-de-vue image (I égal à 2), M et N sont impairs de telle sorte que chaque point-de-vue image dédié à chaque oeil de l'observateur puisse être entouré, dans chaque lobe, d'un même nombre de points-de-vue tampons.

Par exemple et dans le cas où M et N valent chacun 5 (formant un écran à 10 points-de-vue), le codage du contenu de l'image autostéréoscopique repose sur l'encapsulation d'un couple stéréoscopique dans un format d'image à 10 points-de-vue. Chaque sous-pixel perçu par un oeil est encadré par quatre sous-pixels tampons, 2 sur sa gauche et 2 sur sa droite, qui affichent la même image. Les interférences des sous-pixels voisins avec le point-de-vue perçu sont invisibles puisque tous affichent la même image.

Le décodage de l'image se fait au moyen d'un réseau lenticulaire dont l'architecture innovante, à 10 points-de-vue, permet d'opérer un changement de point-de-vue tous les 1.3 cm. L'écart inter pupillaire moyen étant de 6.5 cm, il permet d'intercaler 4 points-de-vue tampons entre le point-de-vue gauche et le point-de-vue droit, comme le requiert le contenu. Le lobe de ce réseau est de 13 cm à la distance de teinte plate (deux fois l'écart inter-pupillaire). Cela permet en outre de satisfaire les écarts pupillaires différents de la valeur moyenne de 6.5 cm choisie, avec dans ce cas pour conséquence une modification de la symétrie idéale.

L'invention peut être mise en oeuvre à partir de différentes matrices de pixels. Par exemple, il est possible d'utiliser une dalle de pixels à sous-pixels horizontaux (c'est-à-dire de sous-pixels superposés verticalement) ou une dalle de pixels à sous-pixels verticaux (c'est-à-dire de sous-pixels juxtaposés horizontalement), voire une dalle à diodes électroluminescentes organiques (plus connue sous l'acronyme anglais OLED pour « *Organic Light-Emitting Diode* ») ou à une matrice active à diodes électroluminescentes organiques (plus connue sous l'acronyme anglais AMOLED pour «*Active-Matrix Organic Light-Emitting Diode »).*

Dans le cas particulier d'une dalle formée de sous-pixels horizontaux, chaque pixel de la matrice de pixels est composé d'une pluralité de sous-pixels de couleurs différentes superposés les uns aux autres dans le sens des colonnes.

Pour un affichage en 2D, l'orientation en bandes verticales ou horizontales des sous-pixels est sans incidence pour l'utilisateur, qui ne perçoit aucune différence dans l'affichage selon l'orientation de l'écran. L'information est toujours codée au niveau du pixel et la disposition de sa sous-structure n'a aucun impact sur la qualité de l'affichage.

En revanche, pour un affichage en 3D, lorsqu'un réseau lenticulaire agissant par effet loupe est collé à la surface de l'écran, l'orientation des sous-pixels et la régularité de leur géométrie devient déterminante.

Lorsqu'on utilise en mode paysage un écran dont les sous-pixels sont alignés verticalement en mode portrait ou lorsqu'on utilise des dalles de pixels dont la structure des pixels est anisotrope, les microlentilles cylindriques du réseau lenticulaire ne peuvent plus discriminer les couleurs séparément et doivent aligner des pixels entiers. Un pixel entier devient alors l'entité la plus petite que les lentilles peuvent permettre d'observer individuellement par effet loupe.

L'invention concerne aussi un dispositif d'affichage d'une image autostéréoscopique à I points-de-vue, dits point-de-vue image, comprenant :
- un écran d'affichage selon l'invention,
- un module d'affichage configuré pour afficher pour chaque lobe, chacun des I points-de-vue image, répété chacun P/I fois, chaque point-de-vue visible par l'observateur à la distance de teinte plate étant encadré d'au moins 2 points-de-vue tampons affichant chacun ce même point-de-vue image.

Les avantages et effets techniques d'un écran d'affichage selon l'invention s'appliquent *mutatis mutandis* à un dispositif d'affichage selon l'invention.

Selon l'invention, le module d'affichage est configuré pour attribuer à chaque sous-pixel de la matrice de pixel de l'écran d'affichage, un sous-pixel d'une des I images destinées aux yeux de l'observateur. Ce module d'affichage est de préférence formé par un dispositif informatique de pilotage de la matrice de pixels.

Dans tout le texte, on entend par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel.

De préférence, le module d'affichage d'un dispositif selon l'invention est un sous-ensemble d'un programme logiciel destiné à être exécuté par un ordinateur ou par un microprocesseur relié à l'écran d'affichage.

Selon une variante particulièrement avantageuse, I est égal à 2 et ledit module d'affichage est configuré pour afficher dans chaque lobe formé par ledit écran d'affichage, M fois le point-de-vue image dédié à l'oeil gauche de l'observateur et N fois le point-de-vue image dédié à l'oeil droit de l'observateur et en formant T points-de-vue tampon, entre le point-de-vue image dédié à l'oeil gauche et le point-de-vue image dédié à l'oeil droit.

Dans le cas préférentiel où I est égal à 2, ces 2 points-de-vue sont destinés respectivement à l'oeil gauche et droit d'un observateur. Dans le cas où I est supérieur à 2, les 1-2 points-de-vue centraux peuvent être vus soit par l'oeil gauche, soit par l'oeil droit d'un observateur, selon sa position.

Avantageusement et selon l'invention, le dispositif comprend en outre un dispositif de détection, à chaque instant, de la position de la tête de l'observateur par rapport à ladite direction horizontale et/ou verticale de manière à permettre audit module d'affichage de faire glisser les points-de-vue image dans chaque lobe de telle sorte que lesdits points-de-vue écran visibles par l'observateur soient en permanence encadrés par des points-de-vue tampons du point-de-vue image visible par cet oeil.

Un dispositif d'affichage selon cette variante permet de maintenir en permanence l'observateur au centre du lobe de sorte qu'il perçoive (dans le cas où I=2 et N=M=5 pour former 10 points-de-vue écran, P=10) les points-de-vue n° 3 et n° 8. Un lobe de deux fois l'écart inter-pupillaire (c'est-à-dire de l'ordre de 13 cm) offre une latitude de déplacement limitée. Plutôt que de contraindre l'observateur à se placer au centre du lobe, l'invention permet de caler dynamiquement le lobe pour le centrer sur la position de l'observateur, grâce à un dispositif de suivi (aussi connu sous la dénomination anglaise de « *tracking* ») de la tête de l'observateur.

L'invention permet donc d'identifier la position de la tête de l'observateur par rapport à la direction horizontale et/ou verticale de l'écran (c'est-à-dire de détecter les déplacements latéraux de la tête de l'observateur par rapport à l'écran dans le cas de la détection horizontale) et de faire glisser les points-de-vue dans le lobe de manière à présenter les points-de-vue n° 3 et n° 8 à l'observateur. Dans la mesure où le but visé est, dans ce mode de réalisation, uniquement de repérer la position du visage de l'observateur par rapport à la direction horizontale et/ou verticale, une simple caméra 2D est suffisante pour assurer le tracking de la tête de l'observateur.

Selon une variante de réalisation de l'invention, ledit dispositif de détection est configuré pour détecter, à chaque instant, la position de la tête de l'observateur - en particulier de chaque oeil de l'observateur - par rapport à un point prédéterminé de l'écran d'affichage, permettant de définir les coordonnées X, Y, Z de chaque oeil de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère.

Selon cette variante de l'invention, la position de la tête de l'observateur est déterminée à chaque instant dans les trois dimensions, ce qui permet d'utiliser un dispositif selon cette variante dans des applications de réalité augmentée.

En particulier, lorsque la luminosité de l'écran le permet, il est possible d'utiliser l'écran, non pas en vision directe, mais en réflexion sur un miroir semi-réfléchissant, de façon à créer une expérience de réalité augmentée de type "fantôme de Pepper".

Le volume 3D affiché sur l'écran se matérialise alors dans la pièce et offre la possibilité de créer des expériences immersives inédites, pour peu que l'on veille à ne pas créer de conflits relief. Il faut en particulier veiller à ce qu'un objet virtuel profond ne se superpose pas à un élément de la scène situé devant lui.

La dissociation vergence / accommodation ne pose alors plus de problème car le regard prend appui sur le monde physique pour converger sur les éléments virtuels qui s'y inscrivent.

Lorsque l'observateur n'est pas trop près de l'écran, la différence dioptrique est suffisamment faible pour que la sensation de netteté soit bonne et la fatigue visuelle minime.

Pour être crédible, une expérience de réalité augmentée doit cependant offrir une adéquation parfaite entre le monde physique et le monde virtuel. Au-delà des conflits relief qu'il faut impérativement éviter, les objets virtuels qui se superposent au monde réel doivent obéir aux mêmes règles de perspective et réagir aux mouvements de l'observateur de la même façon que les objets dans la pièce. Un cube virtuel se superposant à un cube matériel doit se comporter en tous points comme l'objet réel quand l'observateur bouge la tête. La parallaxe entre objets virtuels perçus par l'observateur doit également rester cohérente avec la position de ses yeux. Pour cela, il est indispensable de mesurer en temps réel, avec une latence faible et de façon très précise, la position de chaque pupille de l'observateur dans les trois dimensions.

La mesure en Z est particulièrement importante dans ce contexte. En effet, compte tenu du bon pouvoir séparateur de l'écran selon l'invention et des grandes profondeurs qu'il permet de simuler, la disparité affichée produit une sensation de volume très différente selon la distance à laquelle est collimaté le contenu, mais aussi selon la distance à laquelle se trouve l'observateur de l'écran. Pour générer des images fidèles au monde physique, le moteur de rendu d'images temps réel doit donc connaître de façon précise la position en Z des pupilles de l'observateur, afin d'adapter en conséquence la base stéréoscopique et la focale, et celle en X et en Y pour ajuster la parallaxe.

L'invention permet donc de connaître la position relative de l'observateur par rapport à l'environnement pour adapter la scène virtuelle en conséquence. En particulier, l'invention selon cette variante permet de connaître la distance à laquelle les pupilles de l'observateur se trouvent de l'écran, pour adapter le rendu de la scène virtuelle et la rendre cohérente avec le monde physique.

Un tel dispositif peut par exemple être utilisé dans un simulateur de vol, de conduite d'engins de chantier, de télé-opération, ou n'importe quel autre simulateur visant à mettre l'utilisateur dans des conditions hyperréalistes, sans nécessiter le port d'un casque de réalité augmentée.

Dans ce contexte applicatif particulier, la pièce peut être vide d'objets et il n'est plus indispensable de préserver la cohérence entre le monde physique et le monde virtuel. La mesure de la position en Z des pupilles reste néanmoins indispensable pour adapter la base stéréoscopique et la focale, tout comme elle est indispensable en X et en Y pour adapter la parallaxe.

L'invention concerne aussi un procédé d'affichage d'une image autostéréoscopique à I points-de-vue, I étant un entier supérieur ou égal à 2, sur un écran d'affichage à P points-de-vue, dits points-de-vue écran, P étant un entier supérieur ou égal à 6 et supérieur ou égal à 3I, comprenant une matrice de pixels agencés par lignes et par colonnes, chaque pixel étant composé d'une pluralité de sous-pixels de couleurs différentes, destinés à afficher chacun un sous-pixel d'un des points-de-vue image, et un réseau de lenticules cylindriques ou une barrière de parallaxe, dit réseau optique, configuré pour permettre la projection de couples de points-de-vue de l'écran prédéterminés vers les yeux d'un observateur situé à une distance nominale de l'écran, dite distance de teinte plate, et pour que les P points-de-vue de l'écran puissent être perçus successivement dans une direction, dite direction horizontale, par ledit observateur à ladite distance de teinte plate, dans des espaces devant l'écran, dit lobes, couvrant chacun I fois l'écart inter-pupillaire moyen d'un observateur.

Le procédé selon l'invention est caractérisé en ce qu'il comprend, pour chaque lobe, l'affectation à chaque point-de-vue écran adjacent de chaque point-de-vue image visible par l'observateur à la distance de teinte plate, d'une copie de ce point-de-vue image de telle sorte que, dans chaque lobe, chacun des I points-de-vue image visible par l'observateur à la distance de teinte plate soit encadré d'au moins 2 points-de-vue tampons affichant chacun ce même point-de-vue image, et en ce qu'il soit constitué de la succession des I points-de-vue image répété chacun P/I fois.

Les avantages et effets techniques d'un écran d'affichage selon l'invention s'appliquent *mutatis mutandis* à un procédé d'affichage selon l'invention.

Selon une variante particulièrement avantageuse de l'invention, I est égal à 2 et le procédé comprend, pour chaque lobe :
- l'affectation aux M premiers points-de-vue écran du point-de-vue image dédié à l'oeil gauche de l'observateur,
- l'affectation aux N points-de-vue écran suivants du point-de-vue image dédiée à l'oeil droit de l'observateur,

M et N étant chacun supérieur ou égal à 3 et leur somme étant égale à P.

L'invention concerne également un écran d'affichage, un dispositif d'affichage et un procédé d'affichage caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :

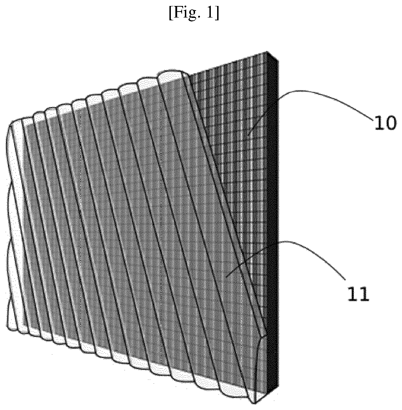

- [Fig. 1] est une vue schématique d'un écran d'affichage selon un mode de réalisation de l'invention,

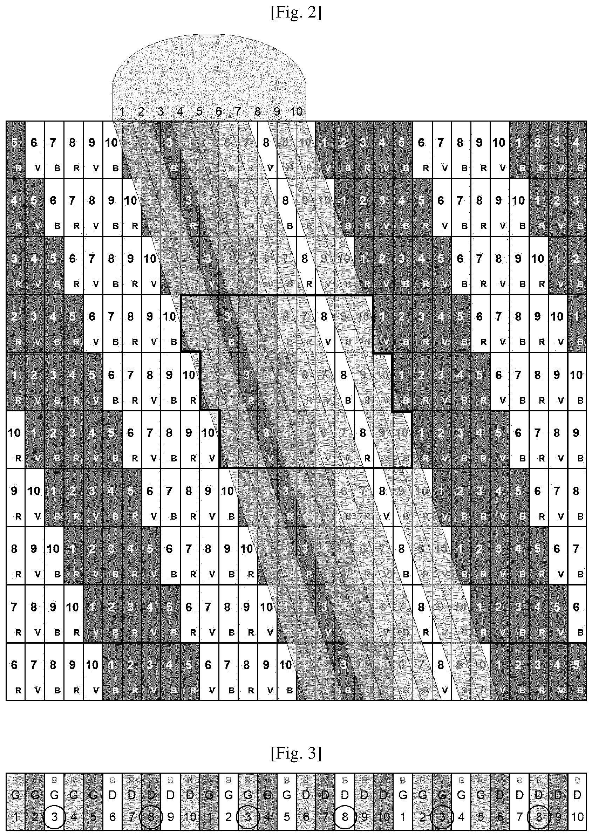

- [Fig. 2] est une vue schématique d'un écran d'affichage selon un mode de réalisation de l'invention à 10 points-de-vue écran d'une image à 2 points-de-vue comprenant une dalle de pixels formée de sous-pixels verticaux surmontée d'un réseau optique présentant une inclinaison de 18,43° par rapport à la verticale (autrement dit, I=2 ; P=10 ; N=5 ; M=5 ; α=18,43°),
- [Fig. 3] est une vue schématique du principe d'agencement des images gauche et droite sur un écran selon un mode de réalisation de l'invention,

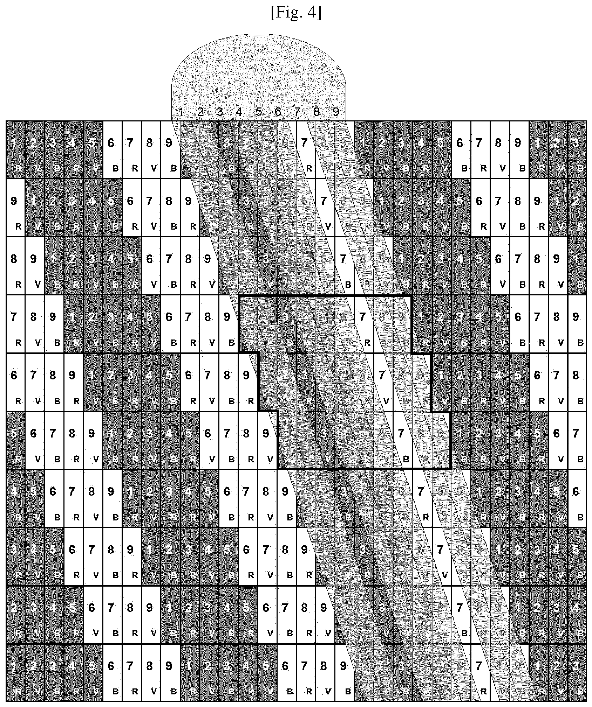

- [Fig. 4] est une vue schématique d'un écran d'affichage selon un mode de réalisation de l'invention à 9 points-de-vue écran d'une image à 2 points-de-vue comprenant une dalle de pixels formée de sous-pixels verticaux surmontée d'un réseau optique présentant une inclinaison de 18,43° par rapport à la verticale (autrement dit, I=2 ; P=9 ; N=5 ; M=4 ; α=18,43°),

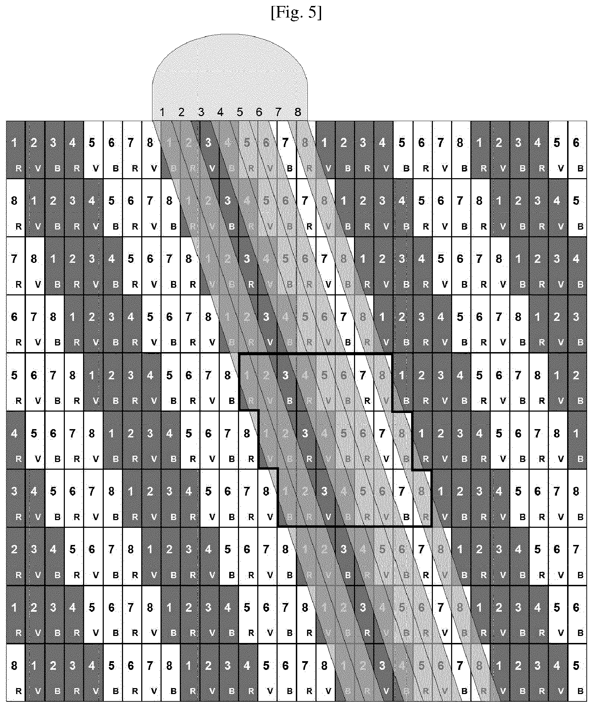

- [Fig. 5] est une vue schématique d'un écran d'affichage selon un mode de réalisation de l'invention à 8 points-de-vue écran d'une image à 2 points-de-vue comprenant une dalle de pixels formée de sous-pixels verticaux et surmontée d'un réseau optique présentant une inclinaison de 18,43° par rapport à la verticale (autrement dit, I=2 ; P=8 ; N=4 ; M=4 ; α=18,43°),

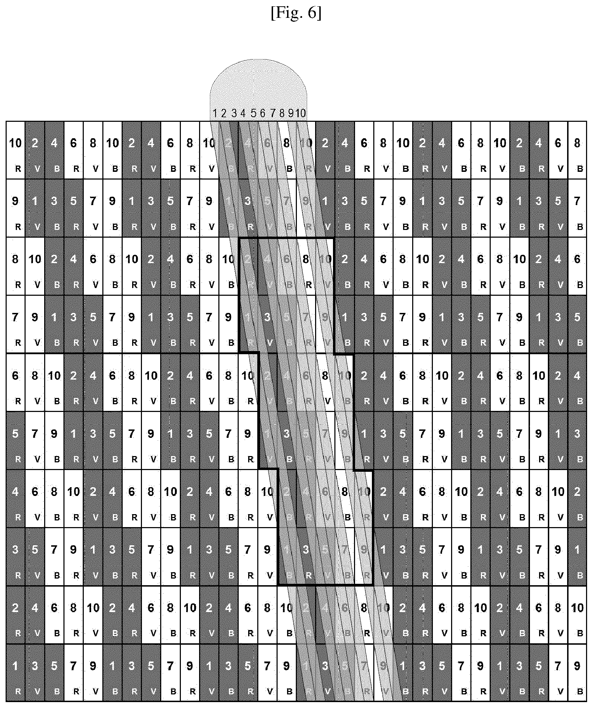

- [Fig. 6] est une vue schématique d'un écran d'affichage selon un mode de réalisation de l'invention à 10 points-de-vue écran d'une image à 2 points-de-vue comprenant une dalle de pixels formée de sous-pixels verticaux et surmontée d'un réseau optique présentant une inclinaison de 9,46° par rapport à la verticale (autrement dit, I=2 ; P=10 ; N=5 ; M=5 ; α=9,46°),

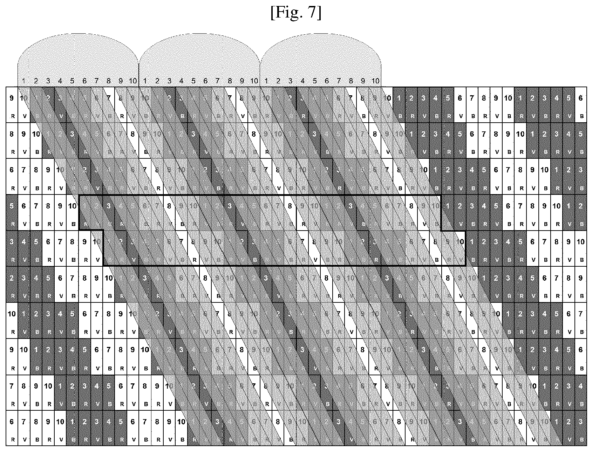

- [Fig. 7] est une vue schématique d'un écran d'affichage selon un mode de réalisation de l'invention à 10 points-de-vue écran d'une image à 2 points-de-vue comprenant une dalle de pixels formée de sous-pixels verticaux et surmontée d'un réseau optique présentant une inclinaison de 26,56° par rapport à la verticale (autrement dit, I=2 ; P=10 ; N=5 ; M=5 ; α=26,56°),

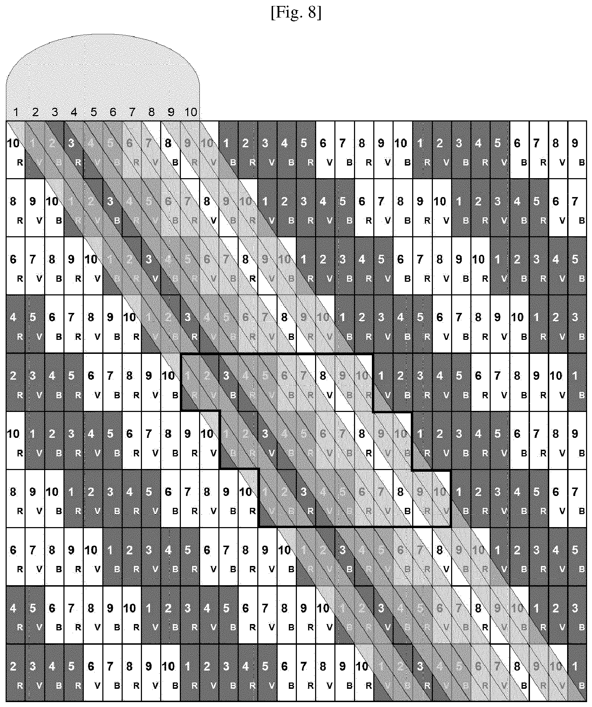

- [Fig. 8] est une vue schématique d'un écran d'affichage selon un mode de réalisation de l'invention à 10 points-de-vue écran d'une image à 2 points-de-vue comprenant une dalle de pixels formée de sous-pixels verticaux et surmontée d'un réseau optique présentant une inclinaison de 33,69° par rapport à la verticale (autrement dit, I=2 ; P=10 ; N=5 ; M=5 ; α=33,69°),

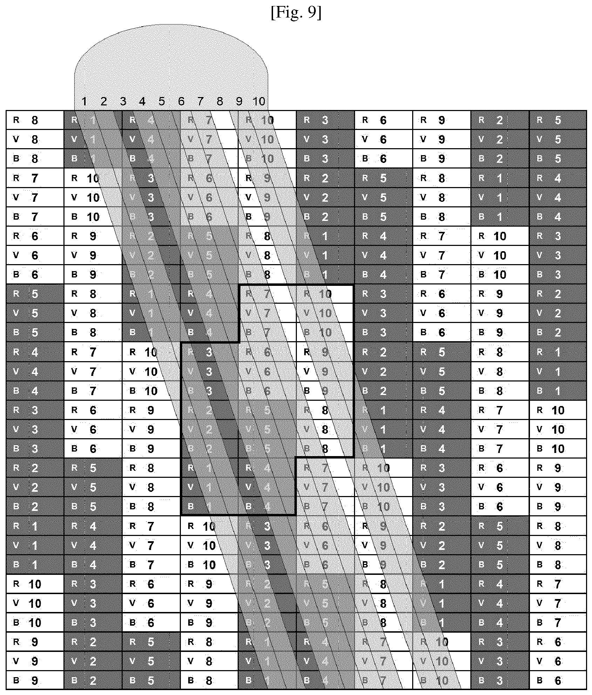

- [Fig. 9] est une vue schématique d'un écran d'affichage selon un mode de réalisation de l'invention à 10 points-de-vue écran d'une image à 2 points-de-vue comprenant une dalle de pixels formée de sous-pixels horizontaux et surmonté d'un réseau optique présentant une inclinaison de 18,43° par rapport à la verticale (autrement dit, I=2 ; P=10 ; N=5 ; M=5 ; α=18,43°),

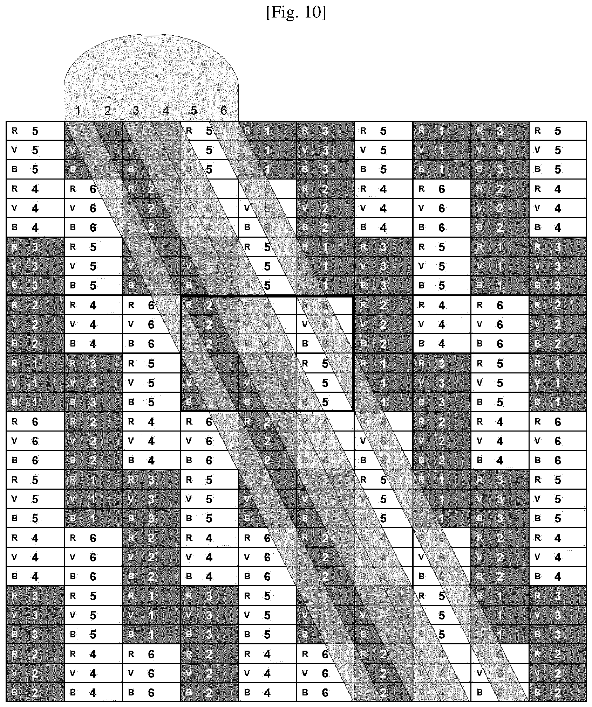

- [Fig. 10] est une vue schématique d'un écran d'affichage selon un mode de réalisation de l'invention à 6 points-de-vue écran d'une image à 2 points-de-vue comprenant une dalle de pixels formée de sous-pixels horizontaux et surmonté d'un réseau optique présentant une inclinaison de 26,56° par rapport à la verticale (autrement dit, I=2 ; P=6 ; N=3 ; M=3 ; α=26,56°),

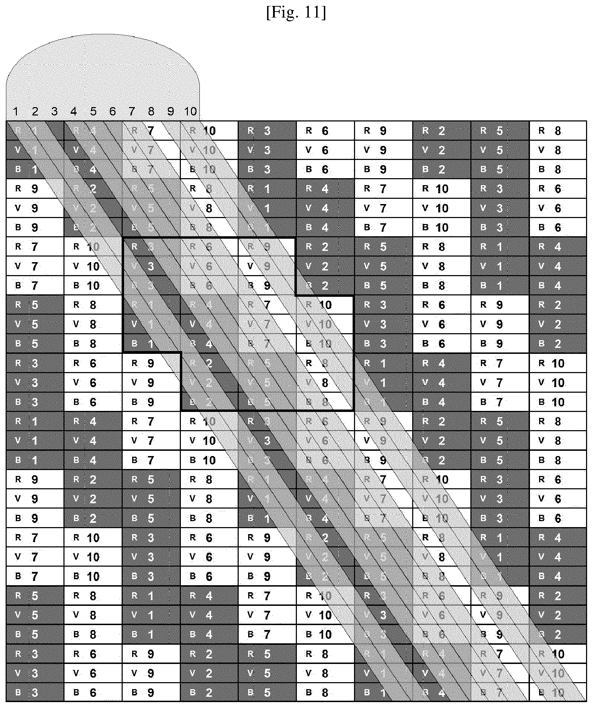

- [Fig. 11] est une vue schématique d'un écran d'affichage selon un mode de réalisation de l'invention à 10 points-de-vue écran d'une image à 2 points-de-vue comprenant une dalle de pixels formée de sous-pixels horizontaux et surmontée d'un réseau optique présentant une inclinaison de 33,69° par rapport à la verticale (autrement dit, I=2 ; P=10 ; N=5 ; M=5 ; α=33,69°),

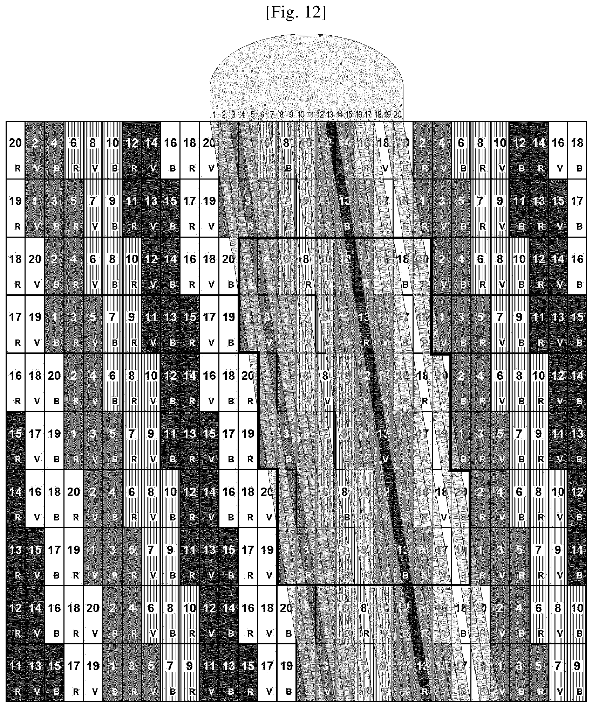

- [Fig. 12] est une vue schématique d'un écran d'affichage selon un mode de réalisation de l'invention à 20 points-de-vue écrans d'une image à 4 points-de-vue comprenant une dalle de pixels formée de sous-pixels horizontaux et surmontée d'un réseau optique présentant une inclinaison de 9,46° par rapport à la verticale (autrement dit, I=4 ; P=20 ; α=9,46°),

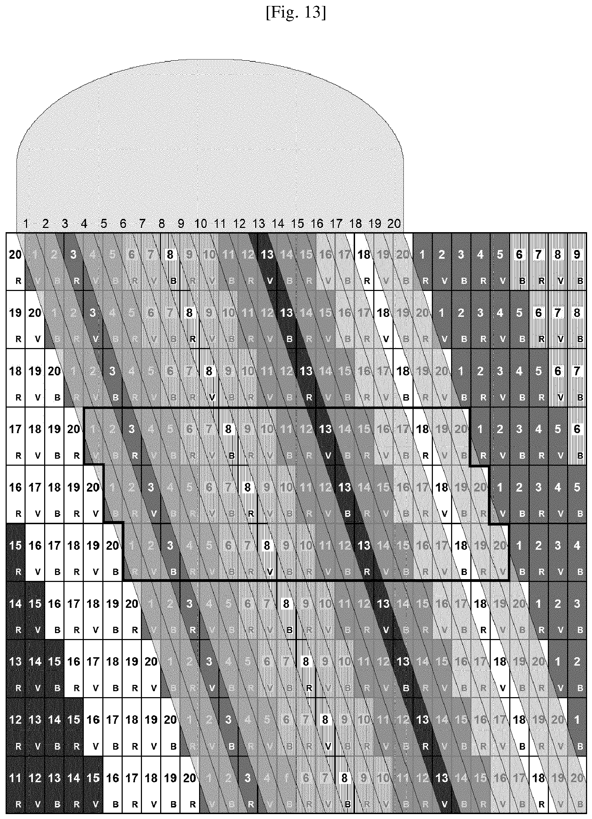

- [Fig. 13] est une vue schématique d'un écran d'affichage selon un mode de réalisation de l'invention à 20 points-de-vue écran d'une image à 4 points-de-vue comprenant une dalle de pixels formée de sous-pixels horizontaux et surmonté d'un réseau optique présentant une inclinaison de 18,43° par rapport à la verticale (autrement dit, I=4 ; P=20 ; α=18,43°),

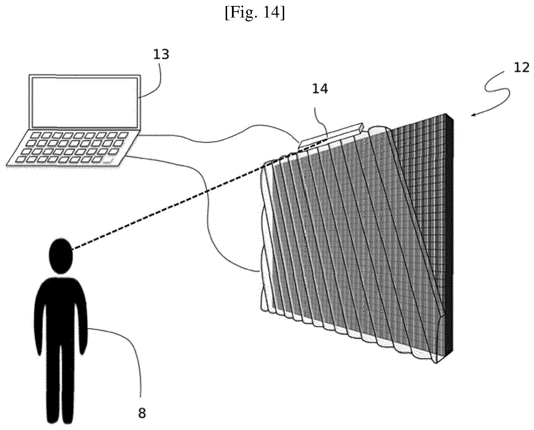

- [Fig. 14] est une vue schématique d'un dispositif d'affichage selon un mode de réalisation de l'invention comprenant un écran selon l'invention, un dispositif de tracking et un module d'affichage.

### 6. Description détaillée d'un mode de réalisation de l'invention

Sur les figures, les échelles et les proportions ne sont pas strictement respectées et ce, à des fins d'illustration et de clarté.

La figure 1 est une vue schématique partielle d'un écran d'affichage autostéréoscopique selon l'invention comprenant une matrice 10 de pixels (aussi désignée par le terme de dalle de pixels) agencés par lignes et par colonnes surmontée d'un réseau optique 11 de lenticules cylindriques. Le réseau optique 11 est représenté partiellement, mais il est évident qu'il s'étend en pratique sur toute la dalle de pixels, ou le cas échéant sur la partie de l'écran dédiée à l'auto stéréo scopie.

La particularité de l'écran selon l'invention est que le réseau optique 11 est configuré pour permettre l'affichage de P points-de-vue et que l'angle solide dans lequel s'étalent ces P points-de-vue est de I fois l'écart inter-pupillaire, où I représente le nombre de points-de-vue de l'image autostéréoscopique à afficher par cet écran.

Par exemple, pour un écran à 10 points-de-vue (P=10) d'affichage d'une image à 2 points-de-vue (I=2), l'angle solide dans lequel s'étalent ces 10 points-de-vue est de 13 cm, c'est-à-dire deux fois l'écart inter-pupillaire moyen de 6,5 cm à la distance de teinte plate de l'écran.

En d'autres termes, l'écran spécifique proposé par les inventeurs est équipé d'un réseau optique 11 destiné à l'affichage de P points-de-vue. L'innovation consiste à n'afficher sur cet écran que I images différentes, chacune répliquée un certain nombre de fois. De part et d'autre de chaque sous-pixel grossi par une lentille pour un oeil se trouvent un certain nombre de sous-pixels appartenant à la même image. Ainsi encadré de ses pairs, un sous-pixel ne peut plus parasiter celui destiné à l'autre oeil. S'il interfère avec ses voisins immédiats, cela ne se voit pas.

Dans le cas spécifique d'un écran à 10 points-de-vue destiné à afficher une image autostéréoscopique à 2 points-de-vue, la fabrication d'un réseau optique à 10 points-de-vue, visibles successivement dans un lobe de 13 cm, requiert une focale des microlentilles 5 fois plus longue que celle nécessaire pour un lobe de 65 cm (65 cm / 13 cm = 5) tel que déjà proposé par le déposant. Les lentilles à longue focale ont un rayon de courbure proportionnellement plus grand et sont plus faciles à usiner.

L'usinage d'un composant optique à longue focale permet d'obtenir un état de surface presque parfait après usinage et collage face avant avec un silicone optique. Aussi, les imperfections inhérentes aux écrans de l'art antérieur sont largement réduites avec un écran selon l'invention.

L'homme du métier pourra déterminer, en fonction de la distance de teinte plate visée et des caractéristiques de l'écran, les paramètres du réseau optique nécessaires pour permettre l'affichage des P points-de-vue dans des lobes de Ix6,5 cm.

Par exemple, pour une dalle 4K de 15.6 pouces, dont la zone d'affichage mesure environ 345 mm x 194 mm et chaque pixel 0.09 mm, le pas du réseau serait d'approximativement 0.299 mm, la focale du réseau lenticulaire dépendrait des conditions d'usage et pourrait être de 4mm pour une teinte plate de 1.30 m (cas de 10 points-de-vue pour afficher une image à 2 points-de-vue)

### 6.1. Mode de réalisation I=2 ; P=10 ; N=5 ; M=5 ; α=18,43° ; sous-pixels verticaux

La figure 2 illustre un mode de réalisation de l'invention représentant un écran à 10 points-de-vue pour afficher une image autostéréoscopique à 2 points-de-vue. La dalle de pixels est formée de sous-pixels verticaux et le réseau optique présente une inclinaison de 18,43° par rapport à la verticale (autrement dit, I=2 ; P=10 ; N=5 ; M=5 ; α=18,43°).

Cet écran est destiné à afficher dans chaque lobe, 5 fois le point-de-vue image dédié à l'œil gauche de l'observateur et 5 fois le point-de-vue image dédié à l'oeil droit de l'observateur. Sur cette figure et toutes celles faisant référence à une image autostéréoscopique à 2 points-de-vue, les sous-pixels assignés à l'oeil droit sont représentés en gris et les sous-pixels assignés à l'oeil gauche sont représentés en blanc.

En outre, un cadre noir matérialise le plus petit « modulo », c'est-à-dire le plus petit bloc de données nécessaires et suffisantes, qui permet de remplir tout l'écran par répétition périodique, avec ou sans déphasage vertical et/ou horizontal. Le « module » s'inscrit le plus souvent sous une seule lentille mais ce n'est pas toujours le cas, selon l'angle du réseau et le nombre de points-de-vue.

Chaque pixel de la dalle de pixels est composé de sous-pixels de couleurs différentes, identifiés sur les figures au moyen des lettre R, V et B (pour le rouge, le vert et le bleu). Chaque sous-pixel affiche un sous-pixel du point-de-vue de l'image gauche (sous-pixel blanc) ou du point-de-vue de l'image droite (sous-pixel gris).

Chaque pixel est formé d'un triplet RVB, représenté schématiquement sur la figure 3 par différents niveaux de gris ainsi que par les lettres R, V et B. Sur la figure 3, les sous-pixels dédiés à l'oeil gauche sont surmontés de la lettre G et les sous-pixels dédiés à l'oeil droit sont surmontés de la lettre D.

L'angle du réseau optique étant de 18.43° dans ce mode de réalisation, sa tangente de 1/3 et les pixels étant carrés, à chaque nouvelle ligne de pixels de l'écran, l'axe optique des lentilles se décale d'un tiers de pixel. A 10 points-de-vue le pas du réseau est approximativement de 10/3 de pixels.

Les points-de-vue 1 à 5 sont dédiés à l'image droite et les points-de-vue 6 à 10 à l'image gauche. Grâce à cet agencement particulier, les points-de-vue 3 et 8 disposent chacun de 2 points-de-vue tampon de part et d'autre, qui affichent la même image et avec lesquels il ne se produit aucune altération visible de l'image perçue.

De préférence, l'écran est utilisé avec un dispositif de tracking de la tête de l'utilisateur permettant de faire en sorte que les points-de-vue 3 et 8 soient les points-de-vue adressés à l'observateur.

Ainsi, les points-de-vue perçus par chaque oeil (schématisés par des cercles sur la figure 3 et par une transparence de la lentille sur la figure 2) sont séparés par 4 autres points-de-vue, qui servent de tampon pour un écart inter-pupillaire de 6.5 cm, ou bien par 3 ou 5 autre points-de-vue lorsque l'écart inter-pupillaire est inférieur ou supérieur.

### 6.2. Mode de réalisation I=2 ; P=9 ; N=5 ; M=5 ; α=18,43° ; sous-pixels verticaux

La figure 4 illustre un autre mode de réalisation de l'invention représentant un écran à 9 points-de-vue pour l'affichage d'une image autostéréoscopique à 2 points-de-vue. La dalle de pixels est formée de sous-pixels verticaux et le réseau optique présente une inclinaison de 18,43° par rapport à la verticale (autrement dit, I=2 ; P=9 ; N=5 ; M=4 ; α=18,43°).

Dans ce mode de réalisation, la répartition des points-de-vue n'est pas équilibrée dans la mesure où l'on dispose d'un nombre impair de points-de-vue écran. Dans l'exemple représenté, on a choisi d'attribuer 5 points-de-vue à l'oeil gauche (représenté par des sous-pixels blancs sur la figure 4) et 4 points-de-vue à l'œil droit (représenté par des sous-pixels gris sur la figure 4). Bien entendu, une autre répartition des points-de-vue aurait pu être choisie pour un résultat sensiblement identique. Selon le sens de déplacement de l'utilisateur, cette répartition peut se rééquilibrer. On privilégie l'oeil qui se déplace vers le centre du lobe pour lui attribuer plus de points-de-vue entre les deux yeux.

Dans ce mode de réalisation, les points-de-vue 1 à 5 sont dédiés à l'image droite et les points-de-vue 6 à 9 à l'image gauche. Les points-de-vue 3 et 7 sont les points-de-vue écran projetés vers les deux yeux de l'observateur et ces derniers disposent de 3 points-de-vue tampon entre eux.

### 6.3. Mode de réalisation I=2 ; P=8 ; N=5 ; M=5 ; α=18,43° ; sous-pixels verticaux

La figure 5 illustre un autre mode de réalisation de l'invention représentant un écran à 8 points-de-vue pour un affichage d'une image autostéréoscopique à 2 points-de-vue. La dalle de pixels est formée de sous-pixels verticaux et le réseau optique présente une inclinaison de 18,43° par rapport à la verticale (autrement dit, I=2 ; P=8 ; N=4 ; M=4 ; α=18,43°).

Dans ce mode de réalisation, les points-de-vue 1 à 4 sont dédiés à l'image droite (représentés en gris) et les points-de-vue 5 à 8 à l'image gauche (représentés en blanc). Les points-de-vue 3 et 7 sont les points-de-vue écran projetés vers les deux yeux de l'observateur et ces derniers disposent de 3 points-de-vue tampon entre eux.

Bien entendu, d'autres configurations sont possibles que celles représentées, à la fois en termes de nombre de points-de-vue écran et d'inclinaison du réseau lenticulaire.

### 6.4. Mode de réalisation I=2 ; P=10 ; N=5 ; M=5 ; α=9,46° ; sous-pixels verticaux

La figure 6 illustre un autre mode de réalisation de l'invention représentant un écran à 10 points-de-vue pour y afficher une image autostéréoscopique à 2 points-de-vue. La dalle de pixels est formée de sous-pixels verticaux et le réseau optique présente une inclinaison de 9,46° par rapport à la verticale (autrement dit, I=2 ; P=10 ; N=5 ; M=5 ; α=9,46°).

Il se distingue du mode de réalisation de la figure 2 en raison de l'angle du réseau optique, qui implique une grille de remplissage des points-de-vue adaptée à cet agencement spécifique, mais aussi par un pas des lentilles deux fois plus fines. Les points-de-vue sont en opposition de phase, ce qui a pour conséquence d'étaler le « modulo » sur 6 lignes au lieu de 2.

### 6.5. Mode de réalisation I=2 ; P=10 ; N=5 ; M=5 ; α=26,56° ; sous-pixels verticaux

La figure 7 illustre un autre mode de réalisation de l'invention représentant un écran à 10 points-de-vue pour l'affichage d'une image autostéréoscopique à 2 points-de-vue. La dalle de pixels est formée de sous-pixels verticaux et le réseau optique présente une inclinaison de 26,56° par rapport à la verticale (autrement dit, I=2 ; P=10 ; N=5 ; M=5 ; α=26,56°).

Il se distingue du mode de réalisation de la figure 2 en raison de l'angle du réseau optique, qui implique une grille de remplissage des points-de-vue adaptée à cet agencement spécifique, mais le pas des lentilles est le même. En revanche, le « module » s'étale ici sous trois lentilles au lieu d'une seule. La figure 7 représente par conséquent ces trois lentilles.

### 6.6. Mode de réalisation I=2 ; P=10 ; N=5 ; M=5 ; α=33,69° ; sous-pixels verticaux

La figure 8 illustre un autre mode de réalisation de l'invention représentant un écran à 10 points-de-vue pour l'affichage d'une image autostéréoscopique à 2 points-de-vue. La dalle de pixels est formée de sous-pixels verticaux et le réseau optique présente une inclinaison de 33,69° par rapport à la verticale (autrement dit, I=2 ; P=10 ; N=5 ; M=5 ; α=33,69°).

Aussi, la seule différence par rapport au mode de réalisation de la figure 4 est l'angle du réseau optique, ce qui implique une grille de remplissage des points-de-vue adaptée à cet agencement spécifique.

### 6.7. Mode de réalisation I=2 ; P=10 ; N=5 ; M=5 ; α=18,43° ; sous-pixels horizontaux

L'invention s'applique également à des dalles de pixels formés de sous-pixels horizontaux.

Ainsi, la figure 9 illustre un mode de réalisation de l'invention représentant un écran à 10 points-de-vue pour l'affichage d'une image autostéréoscopique à 2 points-de-vue. La dalle de pixels est formée de sous-pixels horizontaux et le réseau optique présente une inclinaison de 18,43° par rapport à la verticale (autrement dit, I=2 ; P=10 ; N=5 ; M=5 ; α=18,43°).

Dans cet écran, chaque pixel de la matrice de pixels est composé d'une pluralité de sous-pixels de couleurs différentes superposés les uns aux autres dans le sens des colonnes et associé à un réseau optique formé de lentilles cylindriques présentant chacune un axe principal qui forme un angle de 18,43° avec la direction des colonnes.

Les microlentilles cylindriques du réseau lenticulaire ne peuvent plus discriminer les couleurs séparément et elles grossissent simultanément les trois composantes RVB de chaque pixel. Le pixel entier devient alors l'entité la plus petite que les lentilles peuvent permettre d'observer individuellement par effet loupe.

En outre, les trois points de couleurs d'un pixel (les sous-pixels) sont assemblés pour former approximativement un carré. En d'autres termes et selon cette variante, les points de couleurs s'inscrivent dans trois petits rectangles juxtaposés et superposés trois fois plus large que haut pour former un carré, le pixel.

On observe bien sur la figure 9 que les sous-pixels horizontaux sont groupés par blocs de trois pour afficher chacun le même point-de-vue de l'image dédié soit à l'oeil gauche (représenté en blanc) ou dédié à l'oeil droit (représenté en gris).

Comme pour la version à sous-pixels horizontaux, les points-de-vue 1 à 5 sont dédiés à l'image droite et les points-de-vue 6 à 10 à l'image gauche.

### 6.8. Mode de réalisation I=2 ; P=6 ; N=3 ; M=3 ; α=26,56° ; sous-pixels horizontaux

La figure 10 illustre un mode de réalisation de l'invention représentant un écran à 6 points-de-vue pour l'affichage d'une image autostéréoscopique à 2 points-de-vue. La dalle de pixels est formée de sous-pixels horizontaux et le réseau optique présente une inclinaison de 26,56° par rapport à la verticale (autrement dit, I=2 ; P=6 ; N=3 ; M=3 ; α=26,56°).

Dans ce mode de réalisation, chaque point-de-vue adressé à chaque oeil de l'observateur est encadré par 2 points-de-vue tampon de part et d'autre de ce point-de-vue.

### 6.9. Mode de réalisation I=2 ; P=10 ; N=5 ; M=5 ; α=33,69° ; sous-pixels horizontaux

La figure 11 illustre un mode de réalisation de l'invention représentant un écran à 10 points-de-vue pour l'affichage d'une image autostéréoscopique à 2 points-de-vue. La dalle de pixels est formée de sous-pixels horizontaux et le réseau optique présente une inclinaison de 33,69° par rapport à la verticale (autrement dit, I=2 ; P=10 ; N=5 ; M=5 ; α=33,69°).

Aussi, la seule différence par rapport au mode de réalisation de la figure 9 est l'angle du réseau optique, ce qui implique une grille de remplissage des points-de-vue adaptée à cet agencement spécifique.

Bien entendu, d'autres configurations sont possibles que celles représentées, à la fois en termes de nombre de points-de-vue écran et d'inclinaison du réseau lenticulaire.

A noter que les modes de réalisation des figures 9, 10 et 11 peuvent aussi bien s'appliquer à une dalle IPS (acronyme anglais de « In-Plane Switching »), à une dalle à diodes électroluminescentes organiques (plus connue sous l'acronyme anglais OLED pour « *Organic Light-Emitting Diode* ») ou à une matrice active à diodes électroluminescentes organiques (plus connue sous l'acronyme anglais AMOLED pour « *Active-Matrix Organic Light-Emitting Diode* »)*.*

En effet, à l'instar d'un écran dont les pixels sont composés d'une pluralité de sous-pixels de couleurs différentes superposés les uns aux autres dans le sens des colonnes, les dalles à pixels anisotropes peuvent bénéficier de l'invention pour obtenir un pouvoir séparateur quasi-parfait, en évitant que l'axe optique des lentilles n'intersecte des pixels contigus et génère des images fantômes.

### 6.10. Mode de réalisation I=4 ; P=20 ; α=9,46° ; sous-pixels verticaux

La figure 12 illustre un autre mode de réalisation de l'invention représentant un écran à 20 points-de-vue pour l'affichage d'une image autostéréoscopique à 4 points-de-vue. La dalle de pixels est formée de sous-pixels verticaux et le réseau optique présente une inclinaison de 9,46° par rapport à la verticale (autrement dit, I=4 ; P=20 ; α=9,46°).

Il se distingue essentiellement du mode de réalisation de la figure 6 en raison du nombre de points-de-vue image qui est ici égal à 4 au lieu de 2, ce qui implique une grille de remplissage des points-de-vue adaptée. Le pas des lentilles est dans ce cas deux fois plus grand.

Sur cette figure ainsi que sur la figure 13, les 4 points-de-vue image sont représentés respectivement par les sous-pixels blancs, les sous-pixels gris, les sous-pixels à hachure verticales, et les sous-pixels noirs.

Sur le mode de réalisation de la figure 12, les points-de-vue écrans 1 à 5 affichent le premier point-de-vue image (sous-pixels gris), les points-de-vue écrans 6 à 10 affichent le deuxième point-de-vue image (sous-pixels hachurés), les points-de-vue écrans 11 à 15 affichent le troisième point-de-vue image (sous-pixels noirs), et les points-de-vue écrans 16 à 20 affichent le quatrième point-de-vue image (sous-pixels blancs).

La lentille représentée sur la figure permet de projeter vers l'observateur, selon sa position, les couples stéréoscopiques de points-de-vue 3-8 ; 8-13 ou 13-18, les points-de-vue visibles par l'observateur étant séparés l'un de l'autre de 4 points-de-vue tampons. Chaque point-de-vue visible par l'observateur est bien encadré par au moins 2 points-de-vue écrans qui affichent le même point-de-vue image.

Le nombre de points-de-vue écran permet, en dépit du nombre de points-de-vue image, de maintenir 2 points-de-vue tampons de part et d'autre de chaque point-de-vue adressé aux yeux de l'observateur. En d'autres termes, chaque point-de-vue image s'étend sur 5 sous-pixels consécutifs. A ce titre, on peut considérer que M=5 et N=5 pour chacun des points-de-vue image.

### 6.11. Mode de réalisation I=4 ; P=20 ; N=5 ; M=5 ; α=18,43° ; sous-pixels verticaux

La figure 13 illustre un autre mode de réalisation de l'invention représentant un écran à 20 points-de-vue pour l'affichage d'une image autostéréoscopique à 4 points-de-vue. La dalle de pixels est formée de sous-pixels verticaux et le réseau optique présente une inclinaison de 18,43° par rapport à la verticale (autrement dit, I=4 ; P=20 ; N=5 ; M=5 ; α=18,43°).

Il se distingue essentiellement du mode de réalisation de la figure 2 en raison du nombre de points-de-vue image qui est ici égal à 4 au lieu de 2, ce qui implique une grille de remplissage des points-de-vue adaptée. Le pas des lentilles est dans ce cas deux fois plus grand.

La figure 14 est une vue schématique d'un dispositif d'affichage d'une image autostéréoscopique à 2 points-de-vue selon un mode de réalisation de l'invention.

Un tel dispositif est formé d'un écran d'affichage 12 selon l'invention, d'un module d'affichage 13 configuré pour afficher les images droite et gauche selon la configuration décrite précédemment et d'un dispositif de détection 14, à chaque instant, de la position de la tête de l'observateur 8 par rapport à la direction horizontale de manière à permettre au module d'affichage de faire glisser les points-de-vue image dans chaque lobe de telle sorte que lesdits points-de-vue écran visibles par l'observateur soient en permanence encadrés par des points-de-vue tampons du point-de-vue image visible par cet oeil.

Le dispositif de tracking 14 peut être de tout type connu. Il peut s'agir par exemple du dispositif commercialisé sous la référence Intel RealSense^{®} SR300 (SDK1 Gold Release). Il s'agit d'une caméra RGBD à temps de vol, accompagnée d'une librairie optimisée de tracking de visage.

Selon une variante, le dispositif de détection est configuré pour détecter, à chaque instant, la position de la tête de l'observateur par rapport à un point prédéterminé de l'écran d'affichage, permettant de définir les coordonnées X, Y, Z de l'observateur avec une précision prédéterminée, dans un repère orthonormé dont ledit point prédéterminé de l'écran est l'origine dudit repère, l'écran définissant les axes X et Y de ce repère et la direction perpendiculaire à l'écran définissant l'axe Z de ce repère.

Comme indiqué précédemment, cette variante permet notamment d'utiliser un écran selon l'invention dans une application de réalité augmentée, par exemple pour de la simulation ou des applications d'affichage tête haute dans l'automobile. En effet, la réalité augmentée exige des contrastes importants. Les éléments noirs sont transparents tandis que les éléments blancs sont les plus matériels. Si l'on souhaite afficher un carré blanc sur un fond transparent, il est indispensable de supprimer toutes les causes possibles d'images-fantômes, qui viendraient parasiter les images perçues.

Or, un dispositif selon l'invention qui allie un écran selon l'invention et un dispositif de tracking du visage permet d'obtenir un pouvoir séparateur quasi-parfait et donc applicable à des applications de réalité augmentée.

L'invention ne se limite pas aux seuls modes de réalisation décrits. En particulier et comme précisé, différents écrans peuvent être réalisés pour obtenir un dispositif autostéréoscopique au pouvoir séparateur quasi-parfait. L'invention permet de bouleverser l'expérience du relief telle qu'on la connaît. Les règles habituelles de composition de scènes relief sont caduques et tous les contenus stéréoscopiques peuvent être affichés avec une perception relief inégalée.

Bien que la dissociation vergence / accommodation persiste, il devient plus facile de s'y habituer, en l'absence de tout parasite optique dans le couple stéréoscopique, de dégradation de la luminosité et des couleurs et sans l'encombrement des lunettes 3D ou d'un casque.

Grâce à son pouvoir séparateur inégalé et à l'amplitude exceptionnelle du relief qu'elle permet d'exploiter, les écrans de l'invention permettent de répondre à de très nombreuses demandes pour des usages peu ou pas comblés par les dispositifs existants.

L'invention ouvre d'innombrables perspectives de marchés pour des applications autostéréoscopiques individuelle dans de très nombreux domaines techniques parmi lesquels : imagerie médicale, robotique chirurgicale, visioconférence, automobile, éducation, machines à sous, télésurveillance, télé-opération, pilotage de drones, aéronautique, cartographie, sismologie et prospection géologique, minière et pétrolière, études scientifiques à toutes les échelles, du microscope aux satellites, simulation, chaîne de production des films relief, CAO, design, mécanique, architecture, visites virtuelles, musées, jeux, téléphonie / tablettes, divertissement, etc.

Un cas d'application particulièrement intéressant de réalité augmentée concerne le contexte applicatif particulier où le fond de scène est constitué non pas d'un décor physique mais de l'affichage sur un écran ou au moyen d'un projecteur d'une image 2D, synchronisée avec la scène et figurant les arrière-plans.

L'écran autostéréoscopique selon l'invention permet d'afficher une image autostéréoscopique de très grande amplitude, par exemple de 20 mètres de profondeur, qui occupe tout l'espace physique séparant l'écran selon l'invention de l'image 2D d'arrière-plan. Au-delà d'une vingtaine de mètres, les yeux perçoivent peu de disparité et les repères monoculaires, tels la perspective, deviennent prépondérents. Les arrières-plans 2D, s'ils intègrent des indices visuels forts comme la perspective, complètent donc parfaitement l'illusion et contribuent à augmenter le sentiment d'immersion du spectateur.

Une telle installation est principalement mono utilisateur (en particulier lorsqu'on utilise une image autostéréoscopique à 2 points-de-vue), mais pourrait néanmoins, du fait de l'exceptionnelle qualité de remplissage des deux sous parties de lobe, être utilisée par plusieurs utilisateurs, positionnés à la distance de teinte plate.

## Revendications

1. Écran d'affichage autostéréoscopique à P points-de-vue, dits points-de-vue écran, P étant un entier supérieur ou égal à 6, destiné à afficher une image autostéréoscopique à I points-de-vue, dits points-de-vue image, I étant un entier supérieur ou égal à 2, inférieur ou égal à P/3, de préférence égal à 2, ledit écran comprenant :
- une matrice (10) de pixels agencés par lignes et par colonnes, chaque pixel étant composé d'une pluralité de sous-pixels de couleurs différentes, destinés à afficher chacun un sous-pixel d'un des points-de-vue image,
- un réseau de lenticules cylindriques ou une barrière de parallaxe, dit réseau (11) optique, configuré pour permettre la projection de couples de points-de-vue de l'écran prédéterminés vers les yeux d'un observateur situé à une distance nominale de l'écran, dite distance de teinte plate,
ledit écran étant **caractérisé en ce que** ledit réseau optique (11) est configuré pour que les P points-de-vue de l'écran puissent être perçus successivement dans une direction, dite direction horizontale, par ledit observateur à ladite distance de teinte plate, dans des espaces devant l'écran, dit lobes, couvrant chacun I fois l'écart inter-pupillaire moyen d'un observateur (8), et pour que les points-de-vue écran de chaque couple de points-de-vue visibles par l'observateur à la distance de teinte plate, soient séparés par au moins T points-de-vue, dits points-de-vue tampons, T étant supérieur ou égal à 2, de telle sorte qu'il soit possible d'afficher successivement pour chaque lobe, chacun des I points-de-vue image, répété chacun P/I fois, et que chaque point-de-vue visible par l'observateur à la distance de teinte plate puisse être encadré d'au moins 2 points-de-vue tampons affichant chacun ce même point-de-vue image.

2. Écran d'affichage selon la revendication 1, **caractérisé en ce que** I est égal à 2 et **en ce que** ledit réseau optique (11) est configuré pour pouvoir afficher dans chaque lobe, M fois le point-de-vue image dédié à l'œil gauche (G) de l'observateur et N fois le point-de-vue image dédié à l'oeil droit (D) de l'observateur, M et N étant chacun supérieur ou égal à 3 et leur somme étant égal à P, et en formant T points-de-vue tampons entre le point-de-vue dédié à l'oeil gauche et le point-de-vue dédié à l'oeil droit.

3. Écran d'affichage selon la revendication 2, **caractérisé en ce que** M et N sont impairs de telle sorte que chaque point-de-vue image dédié à chaque oeil de l'observateur puisse être entouré, dans chaque lobe, d'un même nombre de points-de-vue tampon.

4. Écran d'affichage selon l'une des revendications 2 ou 3, **caractérisé en ce que** M et N sont égaux de telle sorte que l'écran permette un affichage symétrique des points-de-vue dédiés respectivement à l'oeil gauche et à l'oeil droit de l'observateur.

5. Écran d'affichage selon l'une des revendications 2 à 4, **caractérisé en ce que** P est égal à 10 de sorte que l'écran présente 10 points-de-vue et **en ce que** ledit réseau optique (11) est configuré pour que les couples visibles par l'observateur à la distance de teinte plate soient les vues 1-6, 2-7, 3-8, 4-9, 5-10 pour des points-de-vue numérotés successivement de 1 à 10 de sorte que chaque sous-pixel perçu par chaque oeil de l'observateur puisse être entouré de chaque côté par 2 points-de-vue tampon.

6. Ecran d'affichage selon l'une des revendications 1 à 5, **caractérisé en ce que** ledit réseau optique (11) est formé de lentilles cylindriques présentant chacune un axe principal qui forme un angle α avec la direction des colonnes.

7. Écran d'affichage selon la revendication 6, **caractérisé en ce que** ledit angle α est compris entre 0° et 45°, et de préférence choisi dans le groupe comprenant les angles de 9,46° ; 18,43° ; 26,56° ; et 33,69°.

8. Écran d'affichage selon l'une des revendications 1 à 7, **caractérisé en ce que** chaque pixel de ladite matrice (10) de pixels est composé d'une pluralité de sous-pixels horizontaux de couleurs différentes superposés les uns aux autres dans le sens des colonnes.

9. Écran d'affichage selon l'une des revendications 1 à 7, **caractérisé en ce que** chaque pixel de ladite matrice (10) de pixels est composé d'une pluralité de sous-pixels verticaux de couleurs différentes juxtaposés les uns aux autres dans le sens des lignes.

10. Dispositif d'affichage d'une image autostéréoscopique à I points-de-vue, dits point-de-vue image, **caractérisé en ce qu'**il comprend :
- un écran d'affichage (12) selon l'une des revendications 1 à 9,
- un module d' affichage (13) configuré pour afficher pour chaque lobe chacun des I points-de-vue image, répété chacun P/I fois, chaque point-de-vue visible par l'observateur à la distance de teinte plate étant encadré d'au moins 2 points-de-vue tampons affichant chacun ce même point-de-vue image.

11. Dispositif d'affichage selon la revendication 10, **caractérisé en ce que** I est égal à 2 et **en ce que** ledit module d'affichage (13) est configuré pour afficher dans chaque lobe formé par ledit écran d'affichage, M fois le point-de-vue image dédié à l'oeil gauche de l'observateur et N fois le point-de-vue image dédié à l'œil droit de l'observateur et en formant T points-de-vue, dits point-de-vue tampon, entre le point-de-vue image dédié à l'oeil gauche et le point-de-vue image dédié à l'œil droit.

12. Dispositif d'affichage selon la revendication 11, **caractérisé en ce qu'**il comprend en outre un dispositif de détection (14), à chaque instant, de la position de la tête de l'observateur par rapport à ladite direction horizontale et/ou verticale de manière à permettre audit module d'affichage (13) de faire glisser les points-de-vue image dans chaque lobe de telle sorte que lesdits points-de-vue écran visibles par l'observateur soient en permanence encadrés par des points-de-vue tampons du point-de-vue image visible par cet oeil.

13. Dispositif d'affichage selon la revendication 12, **caractérisé en ce que** ledit dispositif de détection (14) est configuré pour détecter, à chaque instant, la position de la tête de l'observateur (8) par rapport à un point prédéterminé de l'écran d'affichage, permettant de définir les coordonnées X, Y, Z de l'observateur avec une précision prédéterminée, dans un repère orthonormé dont ledit point prédéterminé de l'écran est l'origine dudit repère, ledit écran définissant les axes X et Y de ce repère et la direction perpendiculaire à l'écran définissant l'axe Z de ce repère.

14. Procédé d'affichage d'une image autostéréoscopique à I points-de-vue, I étant un entier supérieur ou égal à 2, sur un écran d'affichage à P points-de-vue, dits points-de-vue écran, P étant un entier supérieur ou égal à 6 et supérieur ou égal à 3I, comprenant une matrice (10) de pixels agencés par lignes et par colonnes, chaque pixel étant composé d'une pluralité de sous-pixels de couleurs différentes, destinés à afficher chacun un sous-pixel d'un des points-de-vue image, et un réseau de lenticules cylindriques ou une barrière de parallaxe, dit réseau optique (11), configuré pour permettre la projection de couples de points-de-vue de l'écran prédéterminés vers les yeux d'un observateur situé à une distance nominale de l'écran, dite distance de teinte plate, et pour que les P points-de-vue de l'écran puissent être perçus successivement dans une direction, dite direction horizontale, par ledit observateur à ladite distance de teinte plate, dans des espaces devant l'écran, dit lobes, couvrant chacun I fois l'écart inter-pupillaire moyen d'un observateur, **caractérisé en ce qu'**il comprend, pour chaque lobe, l'affectation à chaque point-de-vue écran adjacent de chaque point-de-vue image visible par l'observateur à la distance de teinte plate, d'une copie de ce point-de-vue image de telle sorte que, dans chaque lobe, chacun des I points-de-vue image visible par l'observateur à la distance de teinte plate soit encadré d'au moins 2 points-de-vue tampons affichant chacun ce même point-de-vue image, et **en ce qu'**il soit constitué de la succession des I points-de-vue image répété chacun P/I fois.

15. Procédé d'affichage selon la revendication 14, **caractérisé en ce que** I est égal à 2 et **en ce qu'**il comprend, pour chaque lobe :
- l'affectation aux M premiers points-de-vue écran du point-de-vue image dédié à l'oeil gauche de l'observateur,
- l'affectation aux N points-de-vue écran suivants du point-de-vue image dédiée à l'oeil droit de l'observateur,
M et N étant chacun supérieur ou égal à 3 et leur somme étant égale à P.

## Patentansprüche

1. Autostereoskopischer Anzeigebildschirm mit P Sichtpunkten, genannt Bildschirmsichtpunkte, worin P eine ganze Zahl größer oder gleich 6 ist, welcher dazu bestimmt ist, ein autostereoskopisches Bild in I Sichtpunkten, genannt Bildsichtpunkte, anzuzeigen, worin I eine ganze Zahl größer oder gleich 2, kleiner oder gleich P/3, vorzugsweise gleich 2 ist, worin der Bildschirm umfasst:
eine Matrix von Pixeln, die zeilen- und spaltenweise angeordnet sind, worin jedes Pixel aus mehreren Unterpixeln mit unterschiedlichen Farben besteht, die jeweils dazu bestimmt sind, ein Unterpixel eines der Bildsichtpunkten anzuzeigen,
eine Anordnung zylindrischer Linsen oder eine Parallaxenbarriere, optische Anordnung genannt, die ausgestaltet ist, die Projektion von Paaren bestimmter Sichtpunkte des Bildschirms auf die Augen eines Betrachters zu ermöglichen, der sich in einem Nennabstand des Bildschirms, flacher Farbabstand genannt, befindet,
worin der Bildschirm **dadurch gekennzeichnet ist, dass** die optische Anordnung so konfiguriert ist, dass die P Sichtpunkte des Bildschirms nacheinander in einer Richtung, die als horizontale Richtung bezeichnet wird, durch den Betrachter in dem flachen Farbabstand in Räumen vor dem Bildschirm, die als *Lobes* bezeichnet werden, wahrgenommen werden können, die jeweils das I-fache des mittleren Pupillenabstands eines Betrachters abdecken, und dass die Bildschirmsichtpunkte jedes Paars von sichtbaren Sichtpunkten durch den Betrachter in dem flachen Farbabstand durch mindestens T Sichtpunkte, so genannte Puffersichtpunkte, getrennt sind, worin T größer oder gleich 2 ist, so dass es möglich ist, nacheinander für jeden *Lobe* jeden der I Bild-Sichtpunkte anzuzeigen, die jeweils P/I-mal wiederholt werden, und dass jeder für den Betrachter in dem flachen Farbabstand sichtbare Sichtpunkt von mindestens 2 Puffersichtpunkten umgeben sein kann, die jeweils denselben Bild-Sichtpunkt anzeigen.

2. Anzeigebildschirm nach Anspruch 1, **dadurch gekennzeichnet, dass** I gleich 2 ist und dass die optische Anordnung ausgestaltet ist, in jedem *Lobe* das M-fache des, dem linken Auge des Betrachters zugeordneten, Bildsichtpunktes und das N-fache des, dem rechten Auge des Betrachters zugeordneten, Bildsichtpunktes anzeigen kann, worin M und N jeweils größer oder gleich 3 sind und ihre Summe gleich P ist, und indem T Puffersichtpunkte zwischen dem, dem linken Auge zugeordneten, Sichtpunkt und dem, dem rechten Auge zugeordneten, Sichtpunkt gebildet werden.

3. Anzeigebildschirm nach Anspruch 2, **dadurch gekennzeichnet, dass** M und N ungerade sind, so dass jeder jedem Auge des Betrachters zugeordnete Bildsichtpunkt in jedem *Lobe* von der gleichen Anzahl von Puffersichtpunkten umgeben sein kann.

4. Anzeigebildschirm nach einem der Ansprüche 2 oder 3, **dadurch gekennzeichnet, dass** M und N gleich sind, so dass der Bildschirm eine symmetrische Anzeige der dem linken Auge bzw. dem rechten Auge des Betrachters zugeordneten Bildsichtpunkte ermöglicht.

5. Anzeigebildschirm nach einem der Ansprüche 2 bis 4, **dadurch gekennzeichnet, dass** P gleich 10 ist, so dass der Bildschirm 10 Sichtpunkte aufweist, und dass die optische Anordnung ausgestaltet ist, dass die für den Betrachter sichtbaren Paare im flachen Farbabstand die Sichtpunkte 1-6, 2-7, 3-8, 4-9, 5-10 sind, die nacheinander von 1 bis 10 nummeriert sind, so dass jedes von jedem Auge des Betrachters wahrgenommene Teilpixel auf jeder Seite von 2 Puffersichtpunkten umgeben sein kann.

6. Anzeigebildschirm nach einem der Ansprüche 1 bis 5, **dadurch gekennzeichnet, dass** die optische Anordnung aus zylindrischen Linsen besteht, die jeweils eine Hauptachse haben, die einen Winkel α mit der Richtung der Spalten bildet.

7. Anzeigebildschirm nach Anspruch 6, **dadurch gekennzeichnet, dass** der Winkel α zwischen 0° und 45° liegt und vorzugsweise aus der Gruppe der Winkel 9,46°, 18,43°, 26,56° und 33,69° ausgewählt ist.

8. Anzeigebildschirm nach einem der Ansprüche 1 bis 7, **dadurch gekennzeichnet, dass** jedes Pixel der Pixelmatrix aus mehreren horizontalen Unterpixeln verschiedener Farben besteht, die einander in Richtung der Spalten überlagert sind.

9. Anzeigebildschirm nach einem der Ansprüche 1 bis 7, **dadurch gekennzeichnet, dass** jedes Pixel der Pixelmatrix aus mehreren vertikalen Unterpixeln verschiedener Farben besteht, die in den Richtungslinien nebeneinander liegen.

10. Vorrichtung zur Anzeige eines autostereoskopischen Bildes an I Blickpunkten, genannt Bildblickpunkt, welche umfasst:
einen Anzeigebildschirm nach einem der Ansprüche 1 bis 9,
ein Anzeigemodul, das konfiguriert ist, für jeden *Lobe* jeden der I Bildsichtpunkte anzuzeigen, die jeweils P/I-mal wiederholt werden, worin jeder für den Betrachter in dem flachen Farbabstand sichtbare Sichtpunkt von mindestens 2 Puffersichtpunkten eingerahmt wird, die jeweils denselben Bildsichtpunkt anzeigen.

11. Anzeigevorrichtung nach Anspruch 10, **dadurch gekennzeichnet, dass** I gleich 2 ist und dass das Anzeigemodul so konfiguriert ist, dass es in jedem durch den Anzeigebildschirm gebildeten *Lobe* M-mal das dem linken Auge des Betrachters zugeordnete Bildpunktbild und N-mal das dem rechten Auge des Betrachters zugeordnete Bildpunktbild anzeigt und zwischen dem, dem linken Auge zugeordneten, Bildpunktbild und dem, dem rechten Auge zugeordneten, Bildpunktbild, T Bildpunktbilder so genannte Pufferpunktbilder bildet.

12. Anzeigevorrichtung nach Anspruch 11, **dadurch gekennzeichnet, dass** diese zudem eine Vorrichtung umfasst, die es ermöglicht, zu jedem Zeitpunkt die Position des Kopfes des Betrachters in Bezug auf die horizontale und/oder vertikale Richtung zu erfassen, um es dem Anzeigemodul zu ermöglichen, die Bildsichtpunkte in jedem *Lobe* so zu verschieben, dass die für den Betrachter sichtbaren Bildschirmsichtpunkte ständig von Puffersichtpunkten des für dieses Auge sichtbaren Bildsichtpunktes eingerahmt sind.

13. Anzeigevorrichtung nach Anspruch 12, **dadurch gekennzeichnet, dass** die Erfassungsvorrichtung so konfiguriert ist, dass sie zu jedem Zeitpunkt die Position des Kopfes des Betrachters in Bezug auf einen bestimmten Punkt des Anzeigebildschirms erfasst, was es ermöglicht, die Koordinaten X, Y, Z des Betrachters mit einer bestimmten Genauigkeit in einem orthonormalen Bezugssystem zu definieren, dessen bestimmter Punkt des Bildschirms der Ursprung des Systems ist, worin der Bildschirm die Achsen X und Y dieses Systems definiert und die Richtung senkrecht zum Bildschirm die Achse Z dieses Systems definiert.

14. Verfahren zur Anzeige eines autostereoskopischen Bildes in I Sichtpunkten, worin I eine ganze Zahl größer oder gleich 2 ist, auf einem Anzeigebildschirm in P Sichtpunkten, die als Bildschirmsichtpunkte bezeichnet werden, worin P eine ganze Zahl größer oder gleich 6 und größer oder gleich 3I ist, mit einer Matrix aus zeilen- und spaltenweise angeordneten Pixeln, worin jedes Pixel aus mehreren Unterpixeln mit unterschiedlichen Farben zusammengesetzt ist, worin jedes Pixel aus mehreren Unterpixeln verschiedener Farben zusammengesetzt ist, die jeweils dazu bestimmt sind, ein Unterpixel eines der Bildsichtpunkten anzuzeigen, und eine Anordnung von zylindrischen Linsen oder eine Parallaxenbarriere, worin die optische Anordnung so konfiguriert ist, dass es die Projektion von Paaren von Bildsichtpunkten des vorbestimmten Bildschirms auf die Augen eines Betrachters ermöglicht, der sich in einem Nennabstand vom Bildschirm befindet, der als flacher Farbtonabstand bezeichnet wird, und so, dass die P Sichtpunkte des Bildschirms nacheinander in einer Richtung, die als horizontale Richtung bezeichnet wird, von dem Betrachter in dem flachen Farbabstand in Räumen vor dem Bildschirm wahrgenommen werden können, worin die *Lobes* jeweils das I-fache des mittleren Pupillenabstands eines Betrachters abdecken, **dadurch gekennzeichnet, dass** es für jeden *Lobe* umfasst, jedem benachbarten Bildschirmpunkt jedes Bildsichtpunktes, der für den Betrachter in dem flachen Farbabstand sichtbar ist, eine Kopie dieses Bildsichtpunktes zugewiesen wird, so dass in jedem *Lobe* jeder der I Bildsichtpunkte, die für den Betrachter in der Farbabstandsplatte sichtbar sind, von mindestens 2 Puffersichtpunkten flankiert wird, die jeweils denselben Bildpunkt anzeigen, und dass es aus der Aufeinanderfolge von I Bildsichtpunkten besteht, die jeweils P/I mal wiederholt werden.

15. Anzeigeverfahren nach Anspruch 14, **dadurch gekennzeichnet, dass** I gleich 2 ist und dass es für jeden *Lobe* umfasst:
die Zuordnung des Bildsichtpunktes, der dem linken Auge des Betrachters zugeordnet ist, zu den ersten M Bildschirmsichtpunkten,
die Zuordnung des Bildsichtpunktes, der dem rechten Auge des Betrachters zugeordnet ist, zu den folgenden N Bildschirmsichtpunkten,
wobei M und N jeweils größer oder gleich 3 sind und ihre Summe gleich P ist.

## Claims

1. Autostereoscopic display screen with P points-of-view, called screen points-of-view, P being an integer greater than or equal to 6, intended to display an autostereoscopic image at I points-of-view, called image points-of-view, I being an integer greater than or equal to 2, less than or equal to P/3, preferably equal to 2, said screen comprising:
- a matrix of pixels arranged by rows and by columns, each pixel being composed of a plurality of sub-pixels of different colors, each intended to display a sub-pixel of one of the image points-of-view,
- an array of cylindrical lenticules or a parallax barrier, called an optical array, configured to allow the projection of pairs of predetermined points-of-view of the screen towards the eyes of an observer located at a nominal distance of 1 screen, called flat tint distance,
said screen being **characterized in that** said optical array is configured so that the P points-of-view of the screen can be perceived successively in a direction, called horizontal direction, by said observer at said flat tint distance, in spaces in front of the screen, called lobes, each covering I times the average inter-pupillary distance of an observer, and so that the screen points-of-view of each pair of visible points-of-view by the observer at the flat tint distance, are separated by at least T points-of-view, called buffer points-of-view, T being greater than or equal to 2, so that it is possible to display successively for each lobe, each of the I image points-of-view, each repeated P/I times, and that each point-of-view visible to the observer at the flat tint distance can be surrounded by at least 2 buffer points-of-view each displaying this same image viewpoint.

2. Display screen according to claim 1, **characterized in that** I is equal to 2 and **in that** the said optical array is configured to be able to display in each lobe, M times the image point-of-view dedicated to the left eye of the observer and N times the image point-of-view dedicated to the right eye of the observer, M and N each being greater than or equal to 3 and their sum being equal to P, and by forming T buffer points-of-view between the point-of-view dedicated to the left eye and the point-of-view dedicated to the right eye.

3. Display screen according to claim 2, **characterized in that** M and N are odd such that each image point-of-view dedicated to each eye of the observer can be surrounded, in each lobe, by the same number of buffer points-of-view.

4. Display screen according to one of claims 2 or 3, **characterized in that** M and N are equal so that the screen allows a symmetrical display of the points-of-view dedicated respectively to the left eye and to the observer's right eye.

5. Display screen according to one of claims 2 to 4, **characterized in that** P is equal to 10 so that the screen has 10 points-of-view and **in that** the said optical array is configured so that the pairs visible to the observer at the flat tint distance are views 1-6, 2-7, 3-8, 4-9, 5-10 for points-of-view numbered successively from 1 to 10 so that each sub-pixel perceived by each eye of the observer can be surrounded on each side by 2 buffer points-of-view.

6. Display screen according to one of claims 1 to 5, **characterized in that** the said optical array is formed of cylindrical lenses each having a main axis which forms an angle 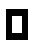 with the direction of the columns.

7. Display screen according to claim 6, **characterized in that** the said angle 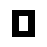 is between 0° and 45°, and preferably chosen from the group comprising the angles of 9.46°; 18.43°; 26.56°; and 33.69°.

8. Display screen according to one of claims 1 to 7, **characterized in that** each pixel of the said matrix of pixels is composed of a plurality of horizontal sub-pixels of different colors superimposed on each other in the direction columns.

9. Display screen according to one of claims 1 to 7, **characterized in that** each pixel of the said matrix of pixels is composed of a plurality of vertical sub-pixels of different colors juxtaposed to each other in the direction lines.

10. Device for displaying an autostereoscopic image at I points-of-view, called image point-of-view, comprising:
- a display screen according to one of claims 1 to 9,
- a display module configured to display for each lobe each of the I image points-of-view, each repeated P/I times, each point-of-view visible to the observer at the flat tint distance being framed at least 2 buffer points-of-view each displaying this same image point-of-view.

11. Display device according to claim 10, **characterized in that** I is equal to 2 and **in that** said display module is configured to display in each lobe formed by said display screen, M times the image point-of-view dedicated to the left eye of the observer and N times the point-of-view image dedicated to the right eye of the observer and forming T points-of-view, called buffer points-of-view, between the image point-of-view dedicated to the left eye and the image point-of-view dedicated to the right eye.

12. Display device according to claim 11, **characterized in that** it further comprises a device for detecting, at any instant, the position of the observer's head with respect to the said horizontal and/or vertical direction so as to allow said display module to slide the image points-of-view in each lobe such that said screen points-of-view visible to the observer are permanently framed by buffer points-of-view from the image point-of-view visible by that eye.

13. Display device according to claim 12, **characterized in that** the said detection device is configured to detect, at each instant, the position of the observer's head with respect to a predetermined point of the display screen, making it possible to define the coordinates X, Y, Z of the observer with a predetermined precision, in an orthonormal frame of reference of which said predetermined point of the screen is the origin of said frame, said screen defining the axes X and Y of this frame and the direction perpendicular to the screen defining the Z axis of this frame.

14. Method for displaying an autostereoscopic image at I points-of-view, I being an integer greater than or equal to 2, on a display screen at P points-of-view, called screen points-of-view, P being an integer greater than or equal to 6 and greater than or equal to 3I, comprising a matrix of pixels arranged by rows and by columns, each pixel being composed of a plurality of sub-pixels of different colors, each intended to display a sub-pixel of one of the image points-of-view, and an array of cylindrical lenticules or a parallax barrier, said optical array, configured to allow the projection of pairs of points-of-view of the predetermined screen towards the eyes of an observer located at a nominal distance from the screen, called the flat tint distance, and so that the P points-of-view of the screen can be perceived successively in one direction, called the horizontal direction, by said observer at said flat tint distance, in spaces in front of the screen, said lobes, each covering each I times the average inter-pupillary distance of an observer, **characterized in that** it comprises, for each lobe, the allocation to each adjacent screen point-of-view of each image point-of-view visible by the observer at the flat tint distance, of a copy of this image point-of-view such that, in each lobe, each of the I image points-of-view visible to the observer at the tint distance plate is flanked by at least 2 buffer points-of-view each displaying this same image points-of-view, and **in that** it is made up of the succession of I image points-of-view each repeated P/I times.

15. Display method according to claim 14, **characterized in that** I is equal to 2 and **in that** it comprises, for each lobe:
- the assignment to the first M screen points-of-view of the image point-of-view dedicated to the left eye of the observer,
- the assignment to the following N screen points-of-view of the image point-of-view dedicated to the right eye of the observer,
M and N each being greater than or equal to 3 and their sum being equal to P.
